# EUROPEAN PATENT SPECIFICATION

(11) **EP 3 451 587 B1**
(45) Date of publication and mention of the grant of the patent: **28.04.2021**
(21) Application number: 18196693.8
(22) Date of filing: 06.06.2013
(51) Int. Cl.: H04L 12/24

(54) **CREATING SEARCHABLE AND GLOBAL DATABASE OF USER VISIBLE PROCESS TRACES**
ERZEUGUNG EINER DURCHSUCHBAREN UND GLOBALEN DATENBANK VON FÜR DEN BENUTZER SICHTBAREN PROZESSVERFOLGUNGEN
CRÉATION D'UNE BASE DE DONNÉES INTERROGEABLE ET GLOBALE DE TRACES DE PROCESSUS VISIBLES POUR L'UTILISATEUR

(30) Priority: 06.06.2012 US 201261656468 P; 06.06.2012 US 201261656469 P; 06.06.2012 US 201261656471 P; 25.10.2012 US 201261718633 P; 02.11.2012 US 201261721979 P; 02.11.2012 US 201261721994 P; 05.11.2012 US 201261722696 P; 07.11.2012 US 201261723684 P; 07.11.2012 US 201261723685 P; 23.11.2012 US 201261729474 P; 15.03.2013 US 201313835483; 15.03.2013 US 201313842909
(43) Date of publication of application: 06.03.2019
(62) Divisional of application: 13170817.4
(73) Proprietor: Juniper Networks, Inc., Sunnyvale, CA 94089 (US)
(72) Inventor: MEHTA, Anish, Fremont, California 94555 (US); BATT, Megh, Dublin, California 94568 (US); REDDY, Rajashekar, San Jose, California 95135 (US); NAKIL, Harshad Bhaskar, San Jose, California 95135 (US); RANJAN, Ashish, Sunnyvale, California 94089 (US); SINGLA, Ankur, Sunnyvale, California 94089 (US); GHOSE, Tirthankar, Sunnyvale, California 94089 (US); RAMESH, ND, Sunnyvale, California 94089 (US); MARQUES, Pedro Roque, Sunnyvale, California 94089 (US); AJAY, Hampapur, Sunnyvale, California 94089 (US)
(74) Representative: D Young & Co LLP

(56) References cited:
- ANDREAS WUNDSAM DAN LEVIN SRINI SEETHARAMAN ANJA FELDMANN DEUTSCHE TELEKOM LABORATORIES / TU BERLIN ET AL: "OFRewind: Enabling Record and Replay Troubleshooting for Networks", USENIX,, 2 May 2011 (2011-05-02), pages 1-14, XP061009522, [retrieved on 2011-05-02]
- Nagios Core Development Team: "Nagios Core Version 3.x Documentation", , 12 November 2011 (2011-11-12), XP055547445, Retrieved from the Internet: URL:https://web.archive.org/web/2011112502 5912if_/http://nagios.sourceforge.net:80/d ocs/nagioscore-3-en.pdf [retrieved on 2019-01-25]
- Zhong Rui: "Nagios Exchange - check_openflow", , 20 October 2011 (2011-10-20), XP055547553, Retrieved from the Internet: URL:https://web.archive.org/web/2011102000 1625/http://exchange.nagios.org:80/directo ry/Plugins/Network-and-Systems-Management/ check_openflow/details [retrieved on 2019-01-25]

## Description

### FIELD AND BACKGROUND

This disclosure generally relates to computer networks, and more particularly to fault detection in computer networks.

In a typical cloud data center environment, there is a large collection of interconnected servers that provide computing and/or storage capacity to run various applications. For example, a data center may comprise a facility that hosts applications and services for subscribers, i.e., customers of data center. The data center may, for example, host all of the infrastructure equipment, such as networking and storage systems, redundant power supplies, and environmental controls. In a typical data center, clusters of storage systems and application servers are interconnected via high-speed switch fabric provided by one or more tiers of physical network switches and routers. More sophisticated data centers provide infrastructure spread throughout the world with subscriber support equipment located in various physical hosting facilities.

Within a data center or other massively distributed complex system, faults and failures are not equivalent. Faults may allow for the continued operation of components of the system that rely on the faulted component. However, faults may develop into and tend to indicate pending failure of one or more components of the system, which deleteriously affects the operation of the system.

A document by Wundsam, A., et al., entitled: "OFRewind: Enabling Record and Replay Troubleshooting for Networks", published in 2011, relates to reproducing software errors, identifying data-path limitations, and locating configuration errors

Nagios Core Development Team: "Nagios Core Version 3.x Documentation", (2011-11-12), XP055547445, URL:https://web.archive.org/web/20111125025912if_/http://nagios.sourceforge.net:80/ docs/nagioscore-3-en.pdf, discloses a monitoring system that allows to define different monitoring objects, services and service groups and their relationship with each other.

### SUMMARY

The invention is defined in the appended independent claims. Further embodiments are provided in the dependent claims.

In general, this disclosure describes techniques for automatically tracing back from a central location (e.g., by using a structurally-queryable (SQL-able) central database), where the trace-back occurs long after a failure occurred, for thereby identifying likely faulty processes in massively distributed complex systems, such as software defined network (SDN) systems.

This disclosure additionally describes techniques for automatically identifying likely faulty components in massively distributed complex systems. In some examples, snapshots of component parameters are automatically repeatedly fed to a pre-trained classifier and the classifier indicates whether each received snapshot is likely to belong to a fault and failure class or to a non-fault/failure class. Components whose snapshots indicate a high likelihood of fault or failure are investigated, restarted or taken off line as a pre-emptive measure. The techniques may be applied in a massively distributed complex system such as a data center.

The details of one or more examples are set forth in the accompanying drawings and the description below. Other features, objects, and advantages will be apparent from the description and drawings, and from the clauses.

### BRIEF DESCRIPTION OF DRAWINGS

FIG. 1 is a block diagram illustrating an example data center in which examples of the techniques described herein may be implemented.
FIG. 2 is a block diagram illustrating in further detail an example system in which the techniques described herein may be implemented.
FIG. 3 is another block diagram illustrating an example system 50 illustrating example configuration of chassis switch and TOR switches as described herein.
FIG. 4 is a block diagram illustrating an example implementation of a virtual network controller for facilitating operation of one or more virtual networks in accordance with one or more examples of this disclosure.
FIG. 5 is a block diagram illustrating an example implementation of a virtual network controller for facilitating operation of one or more virtual networks in accordance with one or more examples of this disclosure
FIG. 6 is a block diagram of a massively distributed complex system, and more specifically, of an SDN system in which a method of tagging traces for later identifying likely faulty processes may be carried out.
FIG. 7 is a block diagram showing further details (e.g., tiers) of a telecom virtualizing subsystem in which the method of identifying likely faulty components may be carried out.
FIG. 8 is a schematic and signal flow diagram illustrating how reports are tagged and aggregated.
FIG. 9 is a flowchart illustrating a process usable in the system of FIG. 8.
FIG. 10 is a block diagram illustrating an example computing device for aggregating data of various processes, in accordance with one or more techniques of this disclosure.
FIG. 11A is a block diagram of a massively distributed complex system in which identifying likely faulty components may be carried out according to techniques described in this disclosure.
FIG. 11B is a block diagram showing further details of a virtualizing subsystem in which identifying likely faulty components may be carried out according to techniques described in this disclosure.
FIG. 12 is a schematic and signal flow diagram illustrating how a trainable classifier is used to heuristically develop a classification algorithm for predicting the likelihood of component fault and/or failure according to techniques described herein.
FIGS. 13A-13B depict a flow chart for an example mode of operation of a system according to techniques described herein.
FIG. 14 is a block diagram illustrating an example computing device for performing operations in accordance with one or more aspects of the present disclosure.

### DETAILED DESCRIPTION

Faults and failures, in the context of software systems, are not one and the same thing. When a failure happens, it is not always easy to determine who or what was at fault (blameworthy), especially if the failure is discovered long after the fault occurred and especially if the point of fault can be anywhere in a massively distributed system such as in a software defined network (SDN) system.

A simple example of a "fault" might be an attempted division by zero in a math processing part of an executing software process. Ideally, the CPU or other data processing hardware component will issue an exception flag when such a violation of basic math rules is attempted and a corresponding error log will be generated locally for the hardware component and/or software component in which the violation was attempted. Later, when a problem debugging analyst reviews the local log, he/she will spot the exception flag(s) and recognize that a simple math rule violation such as division by zero was attempted.

A slightly more complex example of a "fault" might be a generation of an out-of-range result value in a math processing part of an executing software process. For example, the allowed range for an accounting procurement account might be: not less than $5.00 but not more than $1000.00; where, for some reason, an executed math operation produces a result value such as $4.99 or $1000.01 and the violation is not caught by hardware means. Ideally, the executing software will include a results validation thread, and the latter will issue one or more exception flags when such a violation of non-basic math and application-specific rules is attempted. Thereafter, a corresponding error log may be generated locally for the results validation thread of the local process in which the violation was attempted. Later, when a problem debugging analyst reviews the local log, he/she will spot the exception flag(s) and recognize that one or more application-specific rule violations were attempted. The problem debugging analyst may then formulate corrective code for avoiding recurrence of the violation(s).

These simple examples do not address the question of what happens when a rules violating (or other fault-causing) procedure takes place in a multi-encapsulated computing and/or telecommunications environment, such as that where many virtual machines are respectively executing many distributed processes across a massively distributed system such as a software defined network (SDN) system. In that case, even if an exception log exists, the problem debugging analyst often does not know where in the massively distributed system to look because there are too many possibilities and too many spaced apart locations (e.g., physical servers that are miles apart) in which the fault-indicating log or logs might reside. Moreover, because it may take a long time to realize that a problem occurred, by the time the problem debugging analyst retrospectively begins the query the local exception logs, some of them may have already been overwritten by more recent logs due to memory capacity constraints at given local facilities.

This problem may become particularly acute in systems that are very complex, massive in size (in terms of number of unique components and/or in terms of spatial/geographic extent), and where such systems are expected to be up and running at full capacity as much as possible. An example of such a highly complex, massively sized and full time running system is a software defined networking (SDN) system.

Examples of SDN systems include so-called data-centers (e.g., cloud computing centers) that are used to support operations of the Internet, including data storage, search, and retrieval. Additional details for one SDN example are given below. In brief, and sufficient for the present introduction; an SDN system may be comprised of many thousands of complex server computers (a.k.a. servers programmed to run plural virtual machines and encapsulated processes and sub-processes thereof), many thousands of network channels and routers/switches distributed over many thousands of miles where the expectation of users is that both the complex software and hardware components of such a system will remain failure free and operational on a highly reliable and scalable basis.

It is to be understood that the term, "virtual" as used herein does not mean abstract. Instead it refers to physical means by way of which details of an underlying hardware and/or software system are hidden from a user (encapsulated) and/or by way of which details of an underlying other virtual system are hidden from a user. It is also to be understood that the term, "software" as used herein does not mean software in an abstract sense but rather means a physically real and not ephemerally transient thing which non-abstract, non-ephemerally-transient thing is usable for digitally controlling how a configurable digital data processing system and/or configurable analog signal processing system operates.

In view of the above introductory description as to the difference between simple fault/failures in simple systems, and in view of the above introductory description as to the difference between small simple systems and massively complex and distributed systems that execute hundreds of thousands if not more of processes and sub-processes encapsulated in respectively large numbers of virtual machines and cross-communicated over a vast telecommunications system, it would advantageous to have a method and system for automatically tracing back from a central location and long after a failure occurred, the exception logs that were generated for thereby identifying likely faulty processes in such massively distributed complex systems.

The techniques of this disclosure are generally directed to providing trace back from a central location in a massively distributed, complex system, such as a software defined network (SDN) system.

In one example, a method of identifying likely faulty processes in a massively distributed complex system includes subdividing the system into a plurality of tiers each having alike components and alike kinds of processes normally executing therein, subdividing system executions as belong to respective ones of a plurality of user-accessible entities such as user-viewable virtual networks (a.k.a. user-viewable VNets, or more generally User-Viewable Entities-UVE's) and assigning a unique identifying key (UVEKey) for each respective UVE of each respective system tier (TRx), of each respective virtual and/or physical execution machine (VOPEM) and of each respective process instance (PIN), tagging corresponding trace logs with two or more of such UVE, TRx and PIN identifying keys (e.g., UVEKey, TRxKey, PINKey, VMKey, PMKey) when the trace is locally generated, transmitting the tagged traces to, and storing them in a centralized database that can be structurally queried with use of one or more of these identifying keys (e.g., UVEKey, TRxKey, PINKey, VMKey, PMKey).

For each respective UVE and tier, the method may include identifying respective process reports that cross correlate with a corresponding UVE Key and a corresponding Tier key where the reports may include quantitative failure or fault parameters such as memory failures, telecommunications failures, processor failures, packet resends and/or drops, etc.) and relaying the UVE and Tier tagged reports to a centralized and query-able database. For each respective process report that is locally generated, automatically tagging the report with one or more linking keys including a UVEKey. For each respective tier, the method may include automatically determining what part of its resources are used by each of respective UVE's and automatically determining if the allocated resources of any UVE are insufficient due to repeated component failures (e.g., lost packets). For each respective UVE and its detected component failures, the method may include logically associating the detected component failures with one or more of the respective captured parameter snapshots that immediately preceded the respective component failures for that UVE.

The method may further include investigating those of the UVE associated reports that were correlated to failure as being likely to point to the at-fault components and/or tiers of that UVE. The method may also include taking preemptive corrective and/or work-around measures for those of the respective tier components and UVEs that were determined to be more highly likely to enter a failure mode based on the investigation.

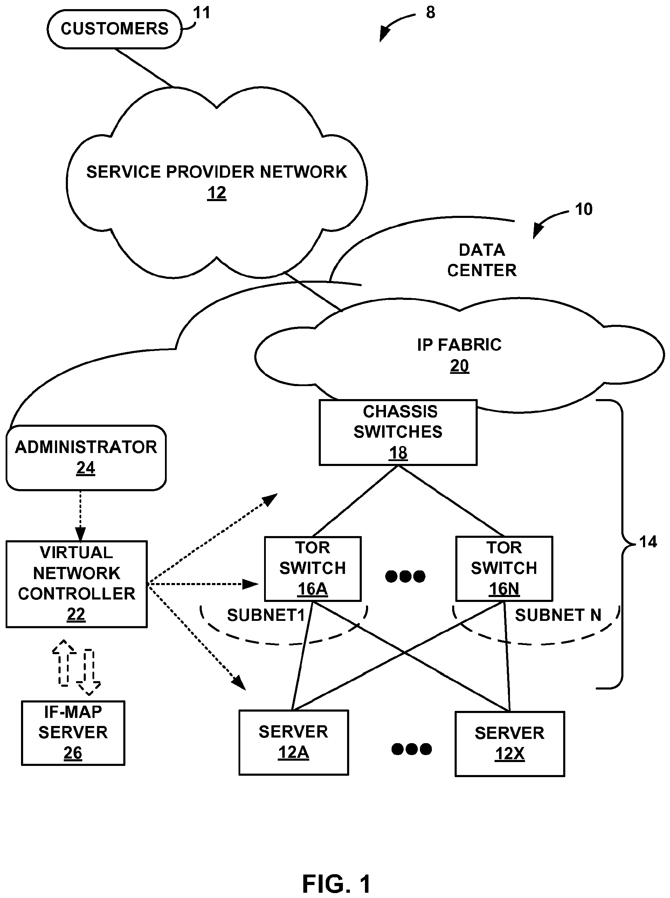

FIG. 1 is a block diagram illustrating an example network 8 having a data center 10 in which examples of the techniques described herein may be implemented. In general, data center 10 provides an operating environment for applications and services for customers 11 coupled to the data center by service provider network 12. Data center 5 may, for example, host infrastructure equipment, such as networking and storage systems, redundant power supplies, and environmental controls. Service provider network 12 may be coupled to one or more networks administered by other providers, and may thus form part of a large-scale public network infrastructure, e.g., the Internet.

In some examples, data center 10 may represent one of many geographically distributed network data centers. As illustrated in the example of FIG. 1, data center 10 may be a facility that provides network services for customers 11. Customers 11 may be collective entities such as enterprises and governments or individuals. For example, a network data center may host web services for several enterprises and end users. Other example services may include data storage, virtual private networks, traffic engineering, file service, data mining, scientific- or super- computing, and so on. In some examples, data center 10 may be individual network servers, network peers, or otherwise.

In this example, data center 5 includes set of storage systems and application servers 12A-12X (herein, "servers 12") interconnected via high-speed switch fabric 14 provided by one or more tiers of physical network switches and routers. Switch fabric 14 is provided by a set of interconnected top-of-rack (TOR) switches 16A-16BN ("TOR switches" 16) coupled to a distribution layer of chassis switches 18. Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multi-homed) connectivity to IP fabric 20 and service provider network 12. Chassis switches 18 aggregates traffic flows and provides high-speed connectivity between TOR switches 16. TOR switches 16A and 16B may be network devices that provide layer 2 (MAC address) and/or layer 3 (IP address) routing and/or switching functionality. TOR switches 16 and chassis switches 18 may each include one or more processors and a memory, and that are capable of executing one or more software processes. Chassis switches 18 are coupled to IP fabric 20, which performs layer 3 routing to route network traffic between data center 10 and customers 11 using service provider network 12.

Virtual network controller 22 ("VNC") provides a logically centralized controller for facilitating operation of one or more virtual networks within data center 10 in accordance with one or more examples of this disclosure. In some examples, virtual network controller 22 may operate in response to configuration input received from network administrator 24.

In accordance with the techniques of this disclosure, virtual network controller 22 may be configured to aggregate data for a set of two or more related processes, to form aggregated data for the set of two or more related processes. In particular, virtual network controller 22 may determine the set of two or more related processes executed by respective devices (e.g., servers 12) in a virtual network of data center 10, and receive data for the set of two or more related processes. In general, the set of processes may correspond to a common "tier," e.g., a common network plane, and each of the processes in a particular set may be substantially similar. By executing substantially similar processes on different devices, data center 10 may provide high availability and reduce risk of failure.

More particularly, in accordance with the techniques of this disclosure, computing devices of data center 10, and processes executed by the computing devices, may be divided into various tiers. Within each tier there may be a set of related (e.g., substantially similar) processes. Furthermore, virtual network controller 22 may define User-Visible Entities (UVEs) for the various tiers. The UVEs may define various data for monitoring processes of the various tiers. For example, the UVEs may define attributes of processes to retrieve. Virtual network controller 22 may receive data output during execution of the processes, and in accordance with the UVEs, extract values for the attributes defined by the UVEs. Virtual network controller 22 may further aggregate this data. For example, the UVE may define a manner in which to aggregate certain types of data, corresponding to the attributes, such as addition, union over sets, concatenation, list generation, or the like.

Virtual network controller 22 may then generate one or more reports that are indicative of a tier and aggregated values for one or more attributes corresponding to the tier, as defined by a corresponding UVE. This aggregation can be performed transparently to the devices executing the processes. That is, the devices executing the processes need not take any part in the aggregation. An administrator may use the generated report to diagnose various aspects of the virtual network of data center 10. For example, the report may include data indicative of one or more of a quantitative failure, a fault parameter, a memory failure, a telecommunications failure, a processor failure, a packet resend, and/or a dropped communication session. The administrator may determine, using the report, whether any or all of these conditions apply and act accordingly, e.g., by reprogramming a device of data center 10, replacing a device of data center 10, adding, replacing, or removing links between devices, adding or upgrading software for one or more devices of data center 10, or the like, based on the contents of the report.

In some examples, virtual network controller 22 includes an analytics layer, that is, an intermediate layer that acts on generic rules. The UVEs may define rules in accordance with the analytics layer. Thus, virtual network controller 22 may operate substantially automatically, that is, without user interference, to perform the techniques of this disclosure. The analytics tier may use definitions of the UVEs to extract information from communications output by the devices executing the corresponding processes and aggregate values for certain attributes, as defined by the UVEs, of the communications.

In this manner, virtual network controller 22 represents an example of a controller device configured to determine, for a virtual network, a set of two or more related processes executed by respective devices in the virtual network, receive data for the set of two or more related processes, and aggregate the data for the set of two or more related processes to form aggregated data for the set of two or more related processes.

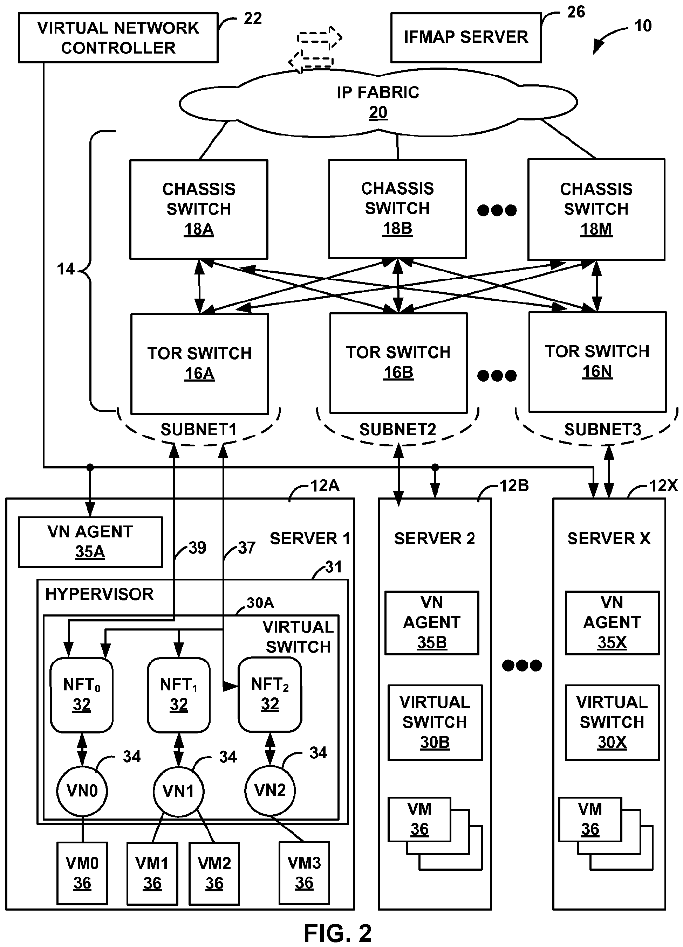

FIG. 2 is a block diagram illustrating an example implementation of data center 10 of FIG. 1 in further detail. In the example of FIG. 2, data center 10 includes an overlay network that extends switch fabric 14 from physical switches 16, 18 to software switches 30A-30X (also referred to as a "virtual switches). Virtual switches 30 dynamically create and manage one or more virtual networks 34 to be used by applications communicating with application instances. In one example, virtual switches 30 execute the virtual network as an overlay network, which provides the capability to decouple an application's virtual address from a physical address (e.g., IP address) of the one of servers 12A-12X ("servers 12") on which the application is executing. Each virtual network 34 may use its own addressing and security scheme and may be viewed as orthogonal from the physical network and its addressing scheme. For example, virtual switch 30A may represent a virtual network switch implemented server 12A (which may be an edge device positioned at an edge of the one or more virtual networks) and may be configured to facilitate overlay of a plurality of networks in the one or more virtual networks using a layer 3 protocol, which is a network layer protocol. Facilitating the network overlay using the layer 3 protocol may be substantially easier than using a layer 2 protocol. This may reduce an implementation cost of the one or more virtual networks. Various techniques may be used to transport packets within and across virtual network(s) 34 over the physical network.

Each virtual switch 30 may execute within a hypervisor, a host operating system or other component of each of servers 12. In some instances, any of virtual switches 30 may be present in a campus access switch or Wi-Fi access point (WAP). In the example of FIG. 2, virtual switch 30 executes within hypervisor 31, also often referred to as a virtual machine manager (VMM), which provides a virtualization platform that allows multiple operating systems to concurrently run on one of host servers 12. In the example of FIG. 2, virtual switch 30A manages virtual networks 34, each of which provides a network environment for execution of one or more virtual machines (VMs) 36 on top of the virtualization platform provided by hypervisor 31. Each VM 36 is associated with one of the virtual subnets VN0-VN2 managed by the hypervisor 31.

In general, each VM 36 may be any type of software application and may be assigned a virtual address for use within a corresponding virtual network 34, where each of the virtual networks may be a different virtual subnet provided by virtual switch 30A. A VM 36 may be assigned its own virtual layer three (L3) IP address, for example, for sending and receiving communications but may be unaware of an IP address of the physical server 12A on which the virtual machine is executing. In this way, a "virtual address" is an address for an application that differs from the logical address for the underlying, physical computer system, i.e., server 12A in the example of FIG. 2.

In one implementation, each of servers 12 includes a virtual network agent ("VN agent") 35A-35X ("VN agents 35") that controls the overlay of virtual networks 34 and that coordinates the routing of data packets within server 12. In general, each VN agent 35 communicates with virtual network controller 22, which generates commands to control routing of packets through data center 10. VN agents 35 may operate as a proxy for control plane messages between virtual machines 36 and virtual network controller 22. For example, a VM 36 may request to send a message using its virtual address via the VN agent 35A, and VN agent 35A may in turn send the message and request that a response to the message be received for the virtual address of the VM 36 that originated the first message. In some cases, a VM 36 may invoke a procedure or function call presented by an application programming interface of VN agent 35A, and the VN agent 35A may handle encapsulation of the message as well, including addressing.

In one example, network packets, e.g., layer three (L3) IP packets or layer two (L2) Ethernet packets generated or consumed by the instances of applications executed by virtual machines 36 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet." Encapsulation and/or de-capsulation of virtual network packets within physical network packets may be performed within virtual switches 30, e.g., within the hypervisor or the host operating system running on each of servers 12. As another example, encapsulation and de-capsulation functions may be performed at the edge of switch fabric 14 at a first-hop TOR switch 16 that is one hop removed from the application instance that originated the packet. This functionality is referred to herein as tunneling and may be used within data center to create one or more overlay networks. Other example tunneling protocols may be used, including IP over GRE, VxLAN, MPLS over GRE, etc.

As noted above, virtual network controller 22 provides a logically centralized controller for facilitating operation of one or more virtual networks within data center 10. Virtual network controller 22 may, for example, maintain a routing information base, e.g., on or more routing tables that store routing information for the physical network as well as the overlay network of data center 10. Similarly, switches 16, 18 and virtual switches 30 maintain routing information, such as one or more routing and/or forwarding tables. In one example implementation, virtual switch 30A of hypervisor 31 implements a network forwarding table (NFT) 32 for each virtual network 34. In general, each NFT 32 stores forwarding information for the corresponding virtual network 34 and identifies where data packets are to be forwarded and whether the packets are to be encapsulated in a tunneling protocol, such as with one or more outer IP addresses.

The routing information may, for example, map packet key information (e.g., destination IP information and other select information from packet headers) to one or more specific next hops within the networks provided by virtual switches 30 and switch fabric 14. In some case, the next hops may be chained next hop that specify a set of operations to be performed on each packet when forwarding the packet, such as may be used for flooding next hops and multicasting replication. In some cases, virtual network controller 22 maintains the routing information in the form of a radix tree having leaf nodes that represent destinations within the network. U.S. Patent 7,184,437 provides details of an example router that utilizes a radix tree for route resolution.

As shown in FIG. 2, each virtual network 34 provides a communication framework for encapsulated packet communications 37 for the overlay network established through switch fabric 14. In this way, network packets associated with any of virtual machines 36 may be transported as encapsulated packet communications 37 via the overlay network. In addition, in the example of FIG. 2, each virtual switch 30 includes a default network forwarding table NFT₀ and provides a default route that allows packet to be forwarded to virtual subnet VN0 without encapsulation, i.e., non-encapsulated packet communications 39 per the routing rules of the physical network of data center 10. In this way, subnet VNO and virtual default network forwarding table NFT₀ provide a mechanism for bypassing the overlay network and sending non-encapsulated packet communications 39 to switch fabric 14.

Moreover, virtual network controller 22 and virtual switches 30 may communicate using virtual subnet VNO in accordance with default network forwarding table NFT₀ during discovery and initialization of the overlay network, and during conditions where a failed link has temporarily halted communication via the overlay network. Once connectivity with the virtual network controller 22 is established, the virtual network controller 22 updates its local routing table to take into account new information about any failed links and directs virtual switches 30 to update their local network forwarding tables 32. For example, virtual network controller 22 may output commands to virtual network agents 35 to update one or more NFTs 32 to direct virtual switches 30 to change the tunneling encapsulation so as to re-route communications within the overlay network, for example to avoid a failed link.

When link failure is detected, a virtual network agent 35 local to the failed link (e.g., VN Agent 35A) may immediately change the encapsulation of network packet to redirect traffic within the overlay network and notifies virtual network controller 22 of the routing change. In turn, virtual network controller 22 updates its routing information and may issue messages to other virtual network agents 35 to update local routing information stored by the virtual network agents within network forwarding tables 32.

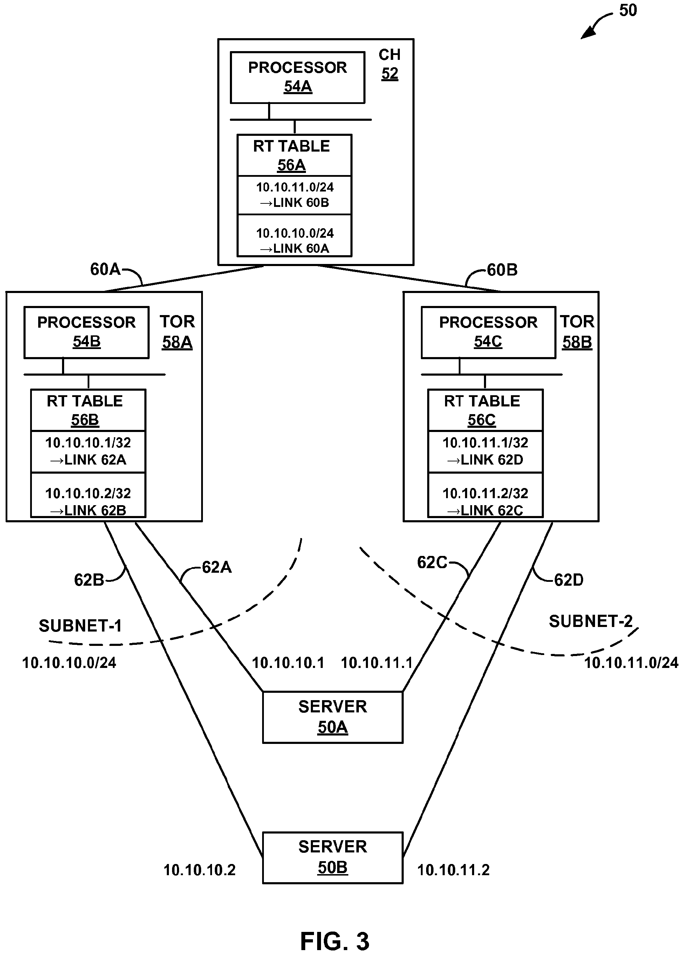

FIG. 3 is another block diagram illustrating an example system 50 illustrating example configuration of routing information within chassis switch and TOR switches as described herein. System 50 of FIG. 3 may, for example, correspond to portions of data center 10 illustrated in FIGS 1 and 2.

In this example, chassis switch 52 ("CH 52"), which may be any of chassis switches 18 of FIG. 1, is coupled to Top of Rack (TOR) switches 58A-58B ("TORs 58") by chassis link 60A and chassis link 60B, respectively ("chassis links 60"). TORs 58 may, in some examples, be any of TORs 16 of FIG. 1. In the example of FIG. 3, TORs 58 are also coupled to servers 50A-50B ("servers 50") by TOR links 62A-62D ("TOR links 62"). Servers 50 may be any of servers 12 (FIG. 1). Here, servers 50 communicate with both TORs 58, and can physically reside in either associated rack. TORs 58 each communicate with a number of network switches, including chassis switch 18A.

Chassis switch 52 has a processor 54A in communication with an interface for communication with a network as shown, as well as a bus that connects a memory (not shown) to processor 54A. The memory may store a number of software modules. These modules include software that controls network routing, such as an Open Shortest Path First (OSPF) module (not shown) containing instructions for operating the chassis switch 18A in compliance with the OSPF protocol. Chassis switch 52 maintains routing table ("RT table") 56A containing routing information for packets, which describes a topology of a network. Routing table 56A may be, for example, a table of packet destination Internet protocol (IP) addresses and the corresponding next hop, e.g., expressed as a link to a network component.

TORs 58 each have a respective processor 54B, 54C, an interface in communication with chassis switch 18A, and a memory (not shown). Each memory contains software modules including an OSPF module and routing table 56B, 56C as described above.

TORs 58 and chassis switch 52 may exchange routing information specifying available routes, such as by using a link-state routing protocol such as OSPF or IS-IS. TORs 58 may be configured as owners of different routing subnets. For example, TOR 58A is configured as the owner of Subnet 1, which is the subnet 10.10.10.0/24 in the example of FIG. 2, and TOR 58B is configured as the owner of Subnet 2, which is the subnet 10.10.11.0/24 in the example of FIG. 2. As owners of their respective Subnets, TORs 58 locally store the individual routes for their subnets and need not broadcast all route advertisements up to chassis switch 18A. Instead, in general TORs 58 will only advertise their subnet addresses to chassis switch 18A.

Chassis switch 52 maintains a routing table ("RT table") 56A, which includes routes expressed as subnets reachable by TORs 58, based on route advertisements received from TORs 58. In the example of FIG. 2, RT table 56A stores routes indicating that traffic destined for addresses within the subnet 10.10.11.0/24 can be forwarded on link 60B to TOR 58B, and traffic destined for addresses within the subnet 10.10.10.0/24 can be forwarded on link 60A to TOR 58A.

In typical operation, chassis switch 18A receives Internet Protocol (IP) packets through its network interface, reads the packets' destination IP address, looks up these addresses on routing table 56A to determine the corresponding destination component, and forwards the packets accordingly. For example, if the destination IP address of a received packet is 10.10.10.0, i.e., the address of the subnet of TOR 58A, the routing table of chassis switch 52 indicates that the packet is to be sent to TOR 58A via link 60A, and chassis switch 52 transmits the packet accordingly, ultimately for forwarding to a specific one of the servers 50.

Similarly, each of TORs 58 receives Internet Protocol (IP) packets through its network interface, reads the packets' destination IP address, looks up these addresses on its routing table 56 to determine the corresponding destination component, and forwards the packets according to the result of the lookup.

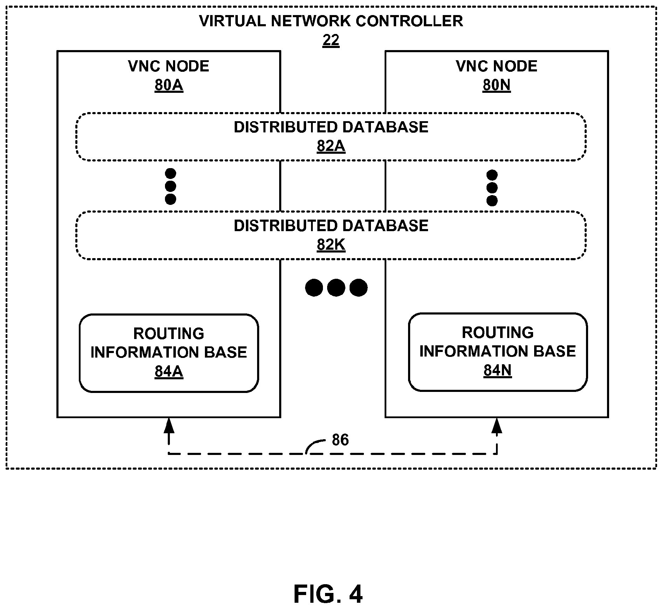

FIG. 4 is a block diagram illustrating an example implementation of a virtual network controller 22 for facilitating operation of one or more virtual networks in accordance with one or more examples of this disclosure. Virtual network controller 22 may, for example, correspond to virtual network controller 22 of data center 10 of FIGS. 1 and 2.

Virtual network controller (VNC) 22 of FIG. 4 illustrates a distributed implementation of a VNC that includes multiple VNC nodes 80A-80N (collectively, "VNC nodes 80") to execute the functionality of a data center VNC, including managing the operation of virtual switches for one or more virtual networks implemented within the data center. Each of VNC nodes 80 may represent a different server of the data center, e.g., any of servers 12 of FIGS. 1-2, or alternatively, on a server or controller coupled to the IP fabric by, e.g., an edge router of a service provider network or a customer edge device of the data center network. In some instances, some of VNC nodes 80 may execute as separate virtual machines on the same server.

Each of VNC nodes 80 may control a different, non-overlapping set of data center elements, such as servers, individual virtual switches executing within servers, individual interfaces associated with virtual switches, chassis switches, TOR switches, and/or communication links. VNC nodes 80 peer with one another using peering links 86 to exchange information for distributed databases, including distributed databases 82A-82K (collectively, "distributed databases 82"), and routing information (e.g., routes) for routing information bases 84A-84N (collectively, "RIBs 84"). Peering links 86 may represent peering links for a routing protocol, such as a Border Gateway Protocol (BGP) implementation, or another peering protocol by which VNC nodes 80 may coordinate to share information according to a peering relationship.

VNC nodes 80 of VNC 22 include respective RIBs 84 each having, e.g., one or more routing tables that store routing information for the physical network and/or one or more overlay networks of the data center controlled by VNC 22. In some instances, one of RIBs 84, e.g., RIB 84A, may store the complete routing table for any of the virtual networks operating within the data center and controlled by the corresponding VNC node 80 (e.g., VNC node 80A).

In general, distributed databases 82 define the configuration or describe the operation of virtual networks by the data center controlled by distributed VNC 22. For instance, distributes databases 82 may include databases that describe a configuration of one or more virtual networks, the hardware/software configurations and capabilities of data center servers, performance or diagnostic information for one or more virtual networks and/or the underlying physical network, the topology of the underlying physical network including server/chassis switch/TOR switch interfaces and interconnecting links, and so on. Distributed databases 82 may each be implemented using, e.g., a distributed hash table (DHT) to provide a lookup service for key/value pairs of the distributed database stored by different VNC nodes 22. Distributed databases 82 may be implemented/stored using computer-readable media of or associated with VNC nodes 22.

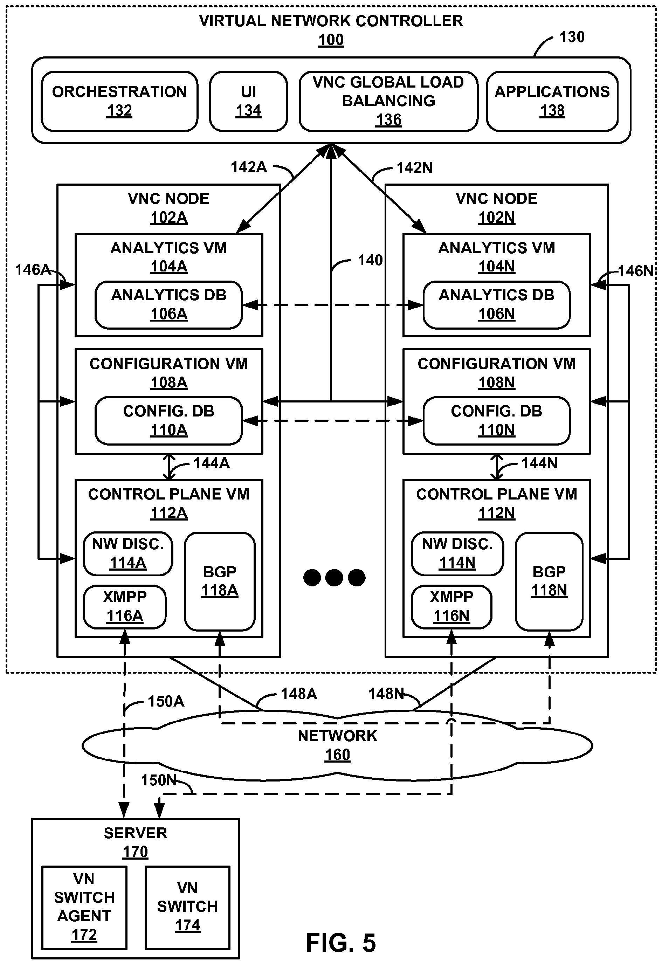

FIG. 5 is a block diagram illustrating an example implementation of a virtual network controller 100 for facilitating operation of one or more virtual networks in accordance with one or more examples of this disclosure. Virtual network controller 100 may, for example, correspond to virtual network controller 22 of data center 10 of FIGS. 1 and 2 or virtual network controller 22 of FIG. 4.

As illustrated in the example of FIG. 5, distributed virtual network controller (VNC) 100 includes one or more virtual network controller ("VNC") nodes 102A-102N (collectively, "VNC nodes 102"). Each of VNC nodes 102 may represent any of VNC nodes 80 of virtual network controller 22 of FIG. 4. VNC nodes 102 that peer with one another according to a peering protocol operating over network 160. Network 160 may represent an example instance of switch fabric 14 and / or IP fabric 20 of FIG. 1. In the illustrated example, VNC nodes 102 peer with one another using a Border Gateway Protocol (BGP) implementation, an example of a peering protocol. In this sense, VNC nodes 102A and 102N may represent a first controller node device and a second controller node device peered using a peering protocol. VNC nodes 102 include respective network discovery modules 114A-114N to discover network elements of network 160.

VNC nodes 102 provide, to one another using the peering protocol, information related to respective elements of the virtual network managed, at least in part, by the VNC nodes 102. For example, VNC node 102A may manage a first set of one or more servers operating as virtual network switches for the virtual network. VNC node 102A may send information relating to the management or operation of the first set of servers to VNC node 102N by BGP 118A. Other elements managed by VNC nodes 102 may include network controllers and/or appliances, network infrastructure devices (e.g., L2 or L3 switches), communication links, firewalls, and VNC nodes 102, for example. Because VNC nodes 102 have a peer relationship, rather than a master-slave relationship, information may be sufficiently easily shared between the VNC nodes 102. In addition, hardware and/or software of VNC nodes 102 may be sufficiently easily replaced, providing satisfactory resource fungibility. Further, distributed VNC 100 may enable may enable horizontally scalable configuration and management, which may give a single system view of the one or more virtual networks.

Each of VNC nodes 102 may include substantially similar/analogous components for performing substantially similar/analogous functionality, said functionality being described hereinafter primarily with respect to VNC node 102A. VNC node 102A may include an analytics database 106A for storing diagnostic information related to a first set of elements managed by VNC node 102A. Analytics database 106A may include a horizontally scalable network analytics database, which may represent a fully integrated analytics collector configured to troubleshoot, visualize, and analyze distributed VNC 100 and the one or more virtual networks. VNC node 102A may share at least some diagnostic information related to VNC node 102A and/or one or more of the first set of elements managed by VNC node 102A and stored in analytics database 106, as well as to receive at least some diagnostic information related to any of the elements managed by others of VNC nodes 102. Analytics database 106A may represent a distributed hash table (DHT), for instance, or any suitable data structure for storing diagnostic information for network elements in a distributed manner in cooperation with others of VNC nodes 102. Analytics databases 106A-106N (collectively, "analytics databases 106") may represent, at least in part, one of distributed databases 82 of distributed virtual network controller 22 of FIG. 4.

VNC node 102A may include a configuration database 110A for storing configuration information related to a first set of elements managed by VNC node 102A. Control plane components of VNC node 102A may store configuration information to configuration database 110A using interface 144A, which may represent an Interface for Metadata Access Points (IF-MAP) protocol implementation. VNC node 102A may share at least some configuration information related to one or more of the first set of elements managed by VNC node 102A and stored in configuration database 110A, (including, e.g., VNC node 102A), as well as to receive at least some configuration information related to any of the elements managed by others of VNC nodes 102. Configuration database 110A may represent a distributed hash table (DHT), for instance, or any suitable data structure for storing configuration information for network elements in a distributed manner in cooperation with others of VNC nodes 102. Configuration databases 110A-110N (collectively, "configuration databases 110") may represent, at least in part, one of distributed databases 82 of distributed virtual network controller 22 of FIG. 4. Configuration databases 110 may store respective RIBs 84 of FIG. 4. Portions of RIBs 84 may be stored by control plane VMs 112 to facilitate operation of network discovery modules 114 and BGPs 118.

Virtual network controller 100 may perform any one or more of the illustrated virtual network controller operations represented by modules 130, which may include orchestration 132, user interface 134, VNC global load balancing 136, and one or more applications 138. VNC 100 executes orchestration module 132 to facilitate the operation of one or more virtual networks in response to a dynamic demand environment by, e.g., spawning/removing virtual machines in data center servers, adjusting computing capabilities, allocating network storage resources, and modifying a virtual topology connecting virtual switches of a virtual network. VNC global load balancing 136 executed by VNC 100 supports load balancing of analytics, configuration, communication tasks, e.g., among VNC nodes 102. Applications 138 may represent one or more network applications executed by VNC nodes 102 to, e.g., change topology of physical and/or virtual networks, add services, or affect packet forwarding. In some instances, a centralized network management system or other controller executes modules 130 and communicates using a northbound interface of VNC nodes 102 to perform orchestration, configure VNC nodes 102, perform VNC global load balancing, and execute VNC nodes 102 with virtual network applications 138.

User interface 134 includes an interface usable to an administrator (or software agent) to control the operation of VNC nodes 102. For instance, user interface 134 may include methods by which an administrator may modify, e.g. configuration database 110A of VNC node 102A. Administration of the one or more virtual networks operated by VNC 100 may proceed by uniform user interface 134 that provides a single point of administration, which may reduce an administration cost of the one or more virtual networks.

VNC node 102A may include a control plane virtual machine (VM) 112A that executes control plane protocols to facilitate the distributed VNC techniques described herein. Control plane VM 112A may in some instances represent a native process. In the illustrated example, control VM 112A executes BGP 118A to provide information related to the first set of elements managed by VNC node 102A to, e.g., control plane virtual machine 112N of VNC node 102N. Control plane VM 112A may use an open standards based protocol (e.g., BGP based L3VPN) to distribute information about its virtual network(s) with other control plane instances and/or other third party networking equipment(s). Given the peering based model according to one or more aspects described herein, different control plane instances (e.g., different instances of control plane VMs 112A-112N) may execute different software versions. In one or more aspects, e.g., control plane VM 112A may include a type of software of a particular version, and the control plane VM 112N may include a different version of the same type of software. The peering configuration of the control node devices may enable use of different software versions for the control plane VMs 112A-112N. The execution of multiple control plane VMs by respective VNC nodes 102 may prevent the emergence of a single point of failure.

Control plane VM 112A communicates with virtual network switches, e.g., illustrated VM switch 174 executed by server 170, using a communication protocol operating over network 160. Virtual network switches facilitate overlay networks in the one or more virtual networks. In the illustrated example, control plane VM 112A uses Extensible Messaging and Presence Protocol (XMPP) 116A to communicate with at least virtual network switch 174 by XMPP interface 150A. Virtual network route data, statistics collection, logs, and configuration information may in accordance with XMPP 116A be sent as XML documents for communication between control plane VM 112A and the virtual network switches. Control plane VM 112A may in turn route data to other XMPP servers (such as an analytics collector, e.g., analytics VM 104A) or may retrieve configuration information on behalf of one or more virtual network switches. Control plane VM 112A may further execute a communication interface 144Afor communicating with configuration virtual machine (VM) 108A associated with configuration database 110A. Communication interface 144A may represent an IF-MAP interface. Server 170 may represent an example instance of any of servers 12 of FIGS. 1-2 or servers 50 of FIG. 3, with virtual network switch 174 representing any of virtual switches 30 and virtual network switch agent 172 representing any of virtual network agents 35 of FIG. 2, for example.

VNC node 102A may further include configuration VM 108A to store configuration information for the first set of element to and manage configuration database 110A. Configuration VM 108A, although described as a virtual machine, may in some aspects represent a native process executing on an operating system of VNC node 102A. Configuration VM 108A and control plane VM 112A may communicate using IF-MAP by communication interface 144A and using XMPP by communication interface 146A. In some aspects, configuration VM 108A may include a horizontally scalable multi-tenant IF-MAP server and a distributed hash table (DHT)-based IF-MAP database represented by configuration database 110A. In some aspects, configuration VM 108A may include a configuration translator, which may translate a user friendly higher-level virtual network configuration to a standards based protocol configuration (e.g., a BGP L3VPN configuration), which may be stored using configuration database 110A. Communication interface 140 may include an IF-MAP interface for communicating with other network elements. The use of the IF-MAP may make the storage and management of virtual network configurations very flexible and extensible given that the IF-MAP schema can be dynamically updated. Advantageously, aspects of virtual network controller 100 may be flexible for new applications 138.

VNC node 102A may further include an analytics virtual machine (VM) 104A to store diagnostic information (and/or visibility information) related to at least the first set of elements managed by VNC node 102A. Control plane VM and analytics VM 104 may communicate using an XMPP implementation by communication interface 146A. Analytics VM 104A, although described as a virtual machine, may in some aspects represent a native process executing on an operating system of VNC node 102A.

Analytics VM 104A may include analytics database 106A, which may represent an instance of a distributed database that stores visibility data for virtual networks, such as one of distributed database 82 of distributed virtual network controller 22 of FIG. 4. Visibility information may describe visibility of both distributed VNC 100 and of customer networks. Analytics database 106A of analytics VM 104A may include an XMPP interface on a first (southbound) side and a REST/JASON/XMPP interface on a (northbound) second side by communication interface 142A.

Virtual network switch 174 may implement the layer 3 forwarding and policy enforcement point for one or more end points and/or one or more hosts. The one or more end points or one and/or one or more hosts may be classified into a virtual network due to configuration from control plane VM 112A. Control plane VM 112A may also distribute virtual-to-physical mapping for each end point to all other end points as routes. These routes may give the next hop mapping virtual IP to physical IP and encapsulation technique used (e.g., one of IPinIP, NVGRE, VXLAN, etc.). Virtual network switch 174 may be agnostic to actual tunneling encapsulation used. Virtual network switch 174 may also trap interesting layer 2 (L2) packets, broadcast packets, and/or implement proxy for the packets, e.g. using one of Address Resolution Protocol (ARP), Dynamic Host Configuration Protocol (DHCP), Domain Name Service (DNS), multicast DNS (mDNS), etc.

In some cases, different VNC nodes 102 may be provided by different suppliers. However, the peering configuration of VNC nodes 102 may enable use of different hardware and/or software provided by different suppliers for implementing the VNC nodes 102 of distributed VNC 100. A system operating according to the techniques described above may provide logical view of network topology to end-hosts irrespective of physical network topology, access type, and/or location. Distributed VNC 100 may provide programmatic ways for network operators and/or applications to change topology, to affect packet forwarding, and/or to add services, as well as horizontal scaling of network services, e.g. firewall, without changing the end-host view of the network.

In accordance with the techniques of this disclosure, virtual network controller 100 may be configured to aggregate data for a set of two or more related processes, to form aggregated data for the set of two or more related processes. In particular, virtual network controller 100 may determine the set of two or more related processes executed by respective devices in a virtual network of network 160, and receive data for the set of two or more related processes. In general, the set of processes may correspond to a common "tier," e.g., a common network plane, and each of the processes in a particular set may be substantially similar. By executing substantially similar processes on different devices, network 160 may provide high availability and reduce risk of failure.

More particularly, in accordance with the techniques of this disclosure, computing devices of network 160, and processes executed by the computing devices, may be divided into various tiers. Within each tier there may be a set of related (e.g., substantially similar) processes. Furthermore, virtual network controller 100 may define User-Visible Entities (UVEs) for the various tiers. The UVEs may define various data for monitoring processes of the various tiers. For example, the UVEs may define attributes of processes to retrieve. Virtual network controller 100 may receive data output during execution of the processes, and in accordance with the UVEs, extract values for the attributes defined by the UVEs. Virtual network controller 100 may further aggregate this data. For example, the UVE may define a manner in which to aggregate certain types of data, corresponding to the attributes, such as addition, union over sets, concatenation, list generation, or the like.

Virtual network controller 100 may then generate one or more reports that are indicative of a tier and aggregated values for one or more attributes corresponding to the tier, as defined by a corresponding UVE. This aggregation can be performed transparently to the devices executing the processes. That is, the devices executing the processes need not take any part in the aggregation. An administrator may use the generated report to diagnose various aspects of the virtual network of network 160. For example, the report may include data indicative of one or more of a quantitative failure, a fault parameter, a memory failure, a telecommunications failure, a processor failure, a packet resend, and/or a dropped communication session. The administrator may determine, using the report, whether any or all of these conditions apply and act accordingly, e.g., by reprogramming a device of network 160, replacing a device of network 160, adding, replacing, or removing links between devices, adding or upgrading software for one or more devices of network 160, or the like, based on the contents of the report.

In some examples, virtual network controller 100 includes an analytics layer, that is, an intermediate layer that acts on generic rules. The UVEs may define rules in accordance with the analytics layer. Thus, virtual network controller 100 may operate substantially automatically, that is, without user interference, to perform the techniques of this disclosure. The analytics tier may use definitions of the UVEs to extract information from communications output by the devices executing the corresponding processes and aggregate values for certain attributes, as defined by the UVEs, of the communications.

In this manner, virtual network controller 100 represents an example of a controller device configured to determine, for a virtual network, a set of two or more related processes executed by respective devices in the virtual network, receive data for the set of two or more related processes, and aggregate the data for the set of two or more related processes to form aggregated data for the set of two or more related processes.

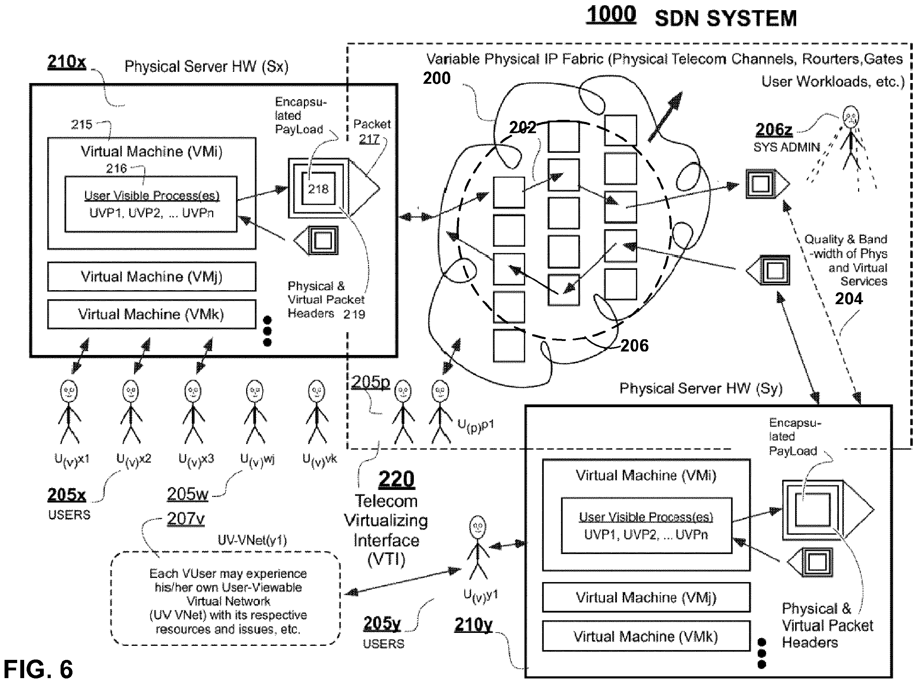

FIG. 6 is a block diagram of a massively distributed complex system 1000, and more specifically, of a software defined networking (SDN) system to which the disclosed concepts may be applied. As an example, FIG. 6 may represent a cloud-implementing data center environment in which there is provided a large collection of network-interconnected servers (e.g., servers 210x, 210y, which may correspond to respective servers 12 of FIG. 1) that provide computer and/or storage capacity to run many different users and/or other kinds of application programs (e.g., programs 216, where these programs can include interactive video gaming support processes and/or simple text processing support processes).

Such an environment tends to be very dynamic from an applications point of view. It may be desirable to have a level of automation that insulates users from the infrastructure details and that can avoid the need for manual intervention to interconnect the physical servers to provide the computation, storage, and/or telecommunications capacities required to enable the various applications to execute to one level of sufficiency or another.

In order to enable automation and agility of the infrastructure (e.g., a physical interconnect fabric 200 as well as a scalable processes of physical and/or virtual machines), there is a growing trend to deploy either an overlay networking solution or a virtualized networking system on top of physical computer clusters, where the overlay and/or virtualizing subsystem encapsulates and automatically manages the details of keeping the many physical data processing resources (e.g., resources of servers 210x, 210y), the many physical network switches and routers (e.g., switches 206, which may correspond to devices of IP fabric 20 in FIG. 1, such as chassis switches 18 and/or TOR switches 16 of FIG. 1) and channels (e.g., channel 202) up and running at desired bandwidths (BW) and desired qualities of service (QOS), represented in FIG. 6 by element 204.

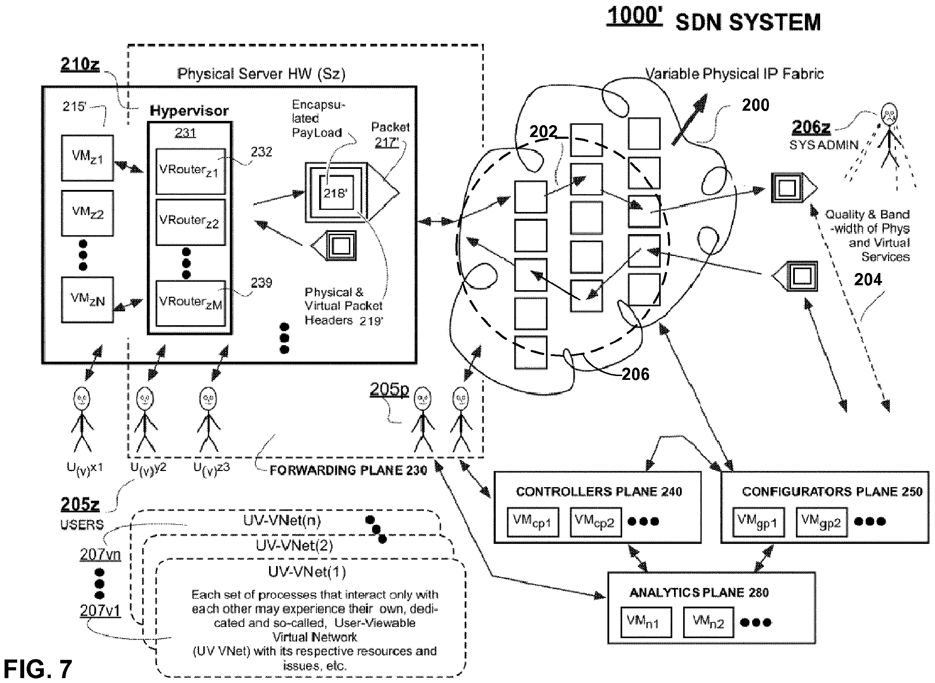

In such an environment, each of many servers (e.g., servers 210x, 210y) may be running one or more application processes (e.g., process 216) and/or guest operating systems (internals of which are not explicitly shown). In order to enable many guest operating systems (also called virtual machines (VMs) 215) on a single server, the system may utilize a virtual machines monitoring system, commonly known as hypervisor (such as ESX, Hyper-V, KVM, Xen, etc.). Hypervisor 231 of FIG. 7 represents an example of such a hypervisor. A single application (e.g., which includes a process or thread UVP1 executing inside a processes support means 216) may require many instances of computer and storage resources that may be provided by the infrastructure as multiple individual servers and/or multiple virtual machines running on one or more servers. In order for the application to share information amongst its distributed computer and storage instances, and with the outside world, a telecommunications network 200 is generally used to enable movement of this information as, for example, packet conveyed data signals (217). Every time a new application is instantiated and/or changed on the infrastructure, a respective virtual network (e.g., VNet 207v) may be created and/or changed to support the new/changed application and to allow all its computer and storage instances to share information with one another and/or the outside world.

The term "user-viewable" as used herein is to be understood as referring to a user defined partitioning of at least an inter-processes communications layer of a system into mutually exclusive sectors where all the inter-processes communications of a set of processes under investigation by the user are presumed by the user to be limited to taking place through one of the partition sectors but not any of the others and thus investigation of process interactions (e.g., for purpose of debugging a problem of such interactions) can be limited to investigating inter-process communications only occurring within the associated one of the plural sectors. The term "user-viewable" as used herein may be understood more broadly as referring not only to the one inter-processes communications sector, but also to the processes themselves and to the other system resources (in addition to the associated and dedicated sector of the communications layer) that the processes under investigation are presumed to use on an exclusive basis (e.g., dedicated virtual machines that support the processes under investigation). Thus, all the inter-process activities of the set of processes under investigation by the user can be presumed by the user to be limited to taking place only inside the user defined User-Visible Entity (UVE) and thus investigation of process actions and interactions (e.g., for purpose of debugging a problem of such interactions) can be limited to investigating operations taking place only inside the associated UVE.

An example of what could be deemed to be a UVE is all the processes of an identified user application program including inter-processes communications resources dedicated to that application program and including computer and storage resources dedicated to that application program. However, the definition is not limited to a single user and/or a single application program. A single UVE can encompass resources dedicated to multiple unrelated applications of one or more identified users, subject to appropriate authentication that the resources (e.g., a partitioned part of the system communications layer) are indeed dedicated to the identified multiple applications. In other words, more generally, a UVE may be thought of as representing some dedicated (partitioned-for-investigation) aspects of operational states of a system or of its resources where investigation can then be limited to the dedicated aspects for purpose of trying to operate, provision, troubleshoot or analyze a corresponding part of the system in some manner. The UVE, in many instances, may exclude those lower level aspects of system states and system resources that are for internal system use only, are hidden (encapsulated away) from the user processes that are under investigation and are thus not intended to represent part of the system application interface to an outside world of user applications. Making all system state and resources (including lower level ones) visible to external applications may be confusing and overwhelming to investigatory applications rather than helpful. The dedicated subset of system states and resources that are deemed to be "User Visible" may be reevaluated from time to time and changed as respective users see fit.

Each UVE may be associated with a definition file. The definition file may specify a type of aggregation for each attribute associated with the UVE (e.g., summation, concatenation, list formation, union over sets, or the like). An aggregator may use the aggregation information of the definition file. That is, processes corresponding to the UVE need not use the aggregation information. Each of the UVEs may be specified in an interface definition language file. An analytics tier may use extra attributes defined in the interface definition language file to perform aggregation. When UVEs are sent to the analytics tier, messages may mark attributes of the UVEs with aggregation tier. Thus, devices or processes executing at the analytics tier may receive both values for attributes associated with a UVE, as well as aggregation information associated with the UVE. In this manner, these devices or processes at the analytics tier may use the aggregation information to determine how to aggregate values for the attributes. In this manner, the aggregation of information can be performed without the processes that generate the information actively participating in the aggregation. That is, an aggregator may receive individual streams of information from the various processes and aggregate the information, without requiring a change on the part of the processes that generate the information to be aggregated.

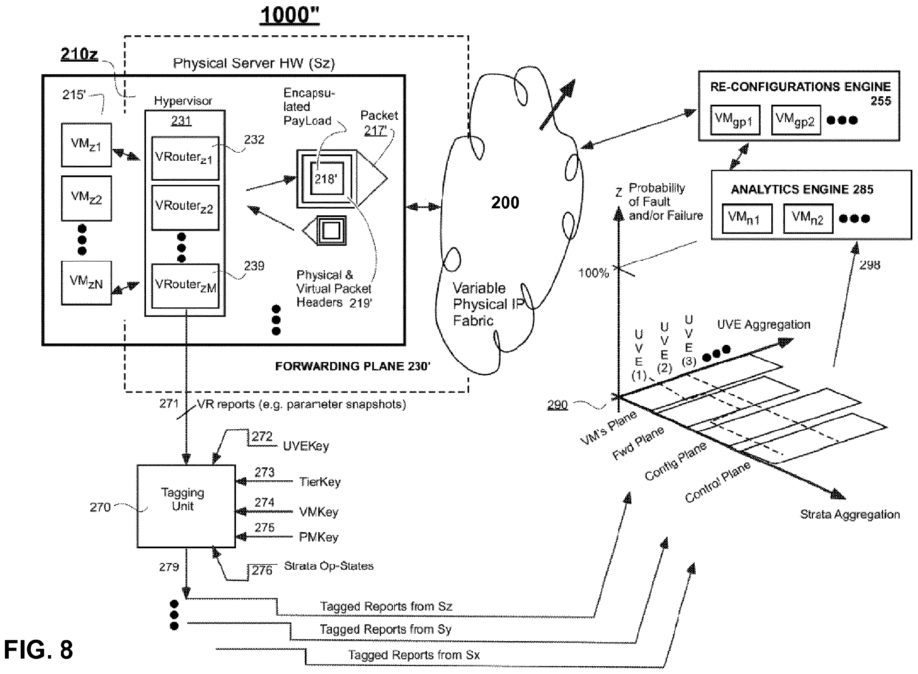

Additionally, the system states and resources that are deemed to be part of a specific UVE do not each have to be directly visible to a corresponding one or more non-administrative users of the application(s) which fit inside the specific UVE. Rather the corresponding compute, storage and telecommunication resources need only be visible to each other for allowing corresponding user processes to interact with one another as required by the corresponding application and/or set of applications that are under investigation. At the same time, the corresponding compute, storage and telecommunication resources should not be visible to; and capable of being interfered by, resources of external other user applications that are not under investigation. If something goes wrong (e.g., a failure) within a given application (or set of applications), it is expected that only the "visible" compute, storage and telecommunication resources that are dedicated to that given application will be involved and thus those are the ones that should be under investigation. (Stated otherwise and referring briefly to FIG. 8, a specific User-Visible Entity (e.g., UVE(2)) may be conceptualized as a dedicated partition that cuts orthogonally across a plurality of system planes (strata), including one or more system telecommunication planes (e.g., a virtual forwarding plane).

In a virtualized or overlay network environment, the edge of the network is extended from the physical network elements (e.g., switches 206 or the like (such as routers)) to software switches (e.g., a VRouter like 232 of FIG. 7) running inside the corresponding hypervisor (231, also in FIG. 7) or inside the host operating system on the physical server (e.g., 210z). The sovirtualized and/or overlayed network that is used by the interacting applications to communicate with their respective process instances is created dynamically and managed by software switch controlling means (e.g., 240) having its own addressing and security scheme where the latter is orthogonal from the physical network (200) and its addressing scheme. There are many different methods that can be employed to transport packets (e.g., 217) within and across the virtual network(s) and over the physical network.

Network IP (and/or Ethernet) packets (e.g., 217) generated or consumed by the instances of each isolated application in the virtual networking domain are encapsulated in further IP (and/or Ethernet) packets that are transported by the physical network. Herein, the virtual network packet will be referred to as inner packet and the physical network packet will be referred to as outer packet. The function of encapsulation and/or de-capsulation of the virtual network packet within physical network packet is done in the hypervisor (231) or the host O/S (not shown) running on the server 210. In addition, the encapsulation and de-capsulation function can also be performed at the edge of the network in a first-hop physical network switch (e.g., one of switches 206), a network router, or the like. This functionality is commonly called tunneling and is actively used in networking to create overlay networks. There are many different tunneling protocols used in the industry wherein different protocols are carried within another protocol, for example, IP over GRE, VxLAN, MPLS over GRE, etc.

Cloud data-center networks can constitute an example of a massively distributed complex system because the number of interconnected servers can be very large with each server presenting one or more links, each having a respective 1Gbps or 10Gbps or greater bandwidth link. In order to construct a network that can interconnect all such links, operators generally use a number of switches (or routers) each with N input (ingress) links x M output (egress) links. Each of these individual switches can act as an IP router with its own IP address(es). Plural routers may be operatively cross coupled to define CLOS networks of routers or similar multi-stage routing arrangements.

Referring to some of the specifics shown in Figs. 6-7, there can be a plurality of different kinds of components in respective "tiers" or service planes of a virtualized overlay system.

One of these planes is the virtual-to-physical forwarding plane 230 (shown in FIG. 7). It includes the so-called, virtual network routers (VNRouters, or more simply VRouters 232-239). These components can reside in the respective hypervisors (231) of the respective physical servers (e.g., 210) or they can reside on a so-called, Top of Rack switch (not shown) which is typically included in the virtual-to-physical forwarding plane 230. When the VRouter is disposed in the hypervisor, it acts as a software switch having both respective virtual ports connected to the virtual machines (VMs) and physical ports corresponding to the physical I/O ports of the respective server 210. Each VNRouter selectively routes/switches packets between its virtual ports and the physical ports and/or between its virtual ports. The VNRouters may be considered as Data/Forwarding Plane components of the Virtual Network System. In order to support scalable flexibility, some of the VRouters (e.g., 232-235) in a given hypervisor may be dedicated to servicing a first virtual network (UV-Vnet(1)), another subset of the VRouters (e.g., 236-237) may be dedicated to servicing a second virtual network (UV-Vnet(2)) and yet another subset of the VRouters (e.g., 238-239) may be held in reserve for dynamic assignment to one of the first and second user-viewable networks (e.g., UV-Vnet(1), UV-Vnet(2)) or to a dynamically instantiated other virtual network (Vnet).

Another of the plural tiers or planes within the SDN system 1000 is referred to as the Control Plane 240 and it may contain a plurality of virtual machines (VM_{cp-i}) implementing respective Controllers or Controller Processes. These are typically configured as horizontally scalable components (just as the VRouters are typically configured as horizontally scalable components) that provide dynamically scalable control functions within the Virtual Network System. The Controllers each operatively couples to a respective set of VNRouters and each distributes respective routing information signals to its dynamically scalable set of VNRouters. In one example, the relative scale of the Virtual Network System is on the order of 100s of 1000s of VNRouters (e.g., 232) and 100s of corresponding Controllers (e.g., VNcp1).

Another of the plural tiers or planes within the SDN system 1000 is referred to as the Configurations Plane 250 and it may contain a plurality of virtual machines (VM_{gp-k}) implementing respective Configuration Processes. These are typically configured as horizontally scalable components (just as the VRouters and the Controllers are typically configured as horizontally scalable components) that provide control functions with respect to interconnect and/or other configurations within the Virtual Network System. The Configuration controllers each operatively couples to a respective parts of the physical network (200) and/or to respective parts of the Control Plane 240 and each distributes respective configuration information signals to its controlled counterparts.

Yet another of the plural tiers or planes within the SDN system 1000 is referred to as the Analytics plane 280. Components (e.g., VMn1) within the Analytics plane 280 are typically charged with automatically monitoring and/or automatically collecting reported states of other parts of the Virtual Network System. In other words, the Analytics component are typically tasked with gathering information from all other components in the system so as to develop a bird's eye or big picture view of what is occurring in the system as a whole. This Big Data information is generally stored in a persistent database. This information can then be used to show the current state of the system, to help debug problems, to do historical or real-time analysis of the system and so on.

Because of the highly scalable and variable nature of the SDN System 1000, it is prone to many fault and failure modes. In other words, because of the scale and numbers of components involved, it is likely that one or more are in failure mode. On the other hand, it is desired that the SDN System 1000 provide its users (e.g., 205x, 205y, 205w, 205z) with continuously robust, reliable, wide bandwidth and high quality services. So the in-failure mode components need to be worked around, for example by drawing on the spare components that are typically held in reserve in each horizontally scalable tier. In other words, the SDN System 1000 may be resilient and continue to operate at near peak capability despite isolated failures in various ones of its components. The various components that desirably avoid failures and/or are configured to work around known or expected failure modes include the different kinds of components in the respective and different tiers or planes, including the forwarding plane 230, the control plane 240, the configuration plane 250 and even the global analytics plane 280.

Sometimes, a complex and hard-to-trace-and-debug failure mode develops in such a complex and massively distributed system. Sometimes, it is necessary for system administrators (e.g., 206z) to trace back to individual processes (e.g., UVP1, UVP2, ... UVPn) within individual user-viewable domains (e.g., user-viewable virtual networks (Vnet's), or more generally UVE's) in order to determine what went wrong.

However, a commonly shared search key that ties together the individual and local trace logs of respective processes in respective virtual and/or physical machines, a commonly shared search key that ties together the processes of specific component tiers, and a commonly shared search key that ties together the processes of specific process instances, may not be available.

In accordance with one aspect of the present disclosure, at the time of trace log generation, each such trace log or other report is automatically tagged with at least one of: (a) a unique User-Viewable Entity (UVE) identifying key (UVEKey) that identifies the corresponding dedicated virtual network (Vnet) and/or other UVE to which the process of the respective report (e.g., trace log) belongs; (b) a respective system tier identifying key (TRxKey) that identifies the corresponding system tier (TRx, e.g., Virtual-to-physical Forwarding Plane) to which the process of the respective report belongs; (c) a respective virtual and/or physical execution machine identifying key (VMKey, PMKey) that identifies the corresponding virtual machine (VM) and/or physical machine (PM) to which the process of the respective report belongs; (d) a respective process instance identifying key (PINKey) that identifies the corresponding instance PIN) of a plurally-instantiated and also identified process to which the respective report belongs; and (e) a respective current operational state indication (Op-State) that indicates a current operational state of a respective UVE, Tier, VM, PM or other such stratifying attribute with which the respective report is associated.

The so-tagged process reports (e.g., trace logs, exception reports, etc.) are then automatically relayed at or soon after the time of generation to a centralized database (e.g., in a Global Analytics Plane) so that they will not be lost due to local memory failures or faults and so that they can then be centrally queried by a system administrator (e.g., 206z) who uses one or more of the added-on tags (e.g., UVEKey, TRxKey, VMKey, PMKey, PINKey, Tier-Op-State, other strata Op-State, etc.) as part of structured queries into the centralized database (e.g., maintained in a Global Analytics Plane of the massively distributed system) for determining the more likely causes of later in time failures. The query-able database may also be used even before a failure occurs to identify likely fault conditions that may lead to a failure, where the likely fault conditions are determined based on past historical records in the database that indicate which of various strata Op-States in combination with which of various exception reports are likely to lead to process failures.

More specifically, the here disclosed teachings may be applied to a Distributed System (e.g., a software defined network (SDN) system) made up of multiple tiers, each having a respective different functionality. Each tier is meant to be independently horizontally scalable, consisting of multiple processes running on different machines, with each process carrying out the same basic operations but on different instance of respective data. No one process within a tier may manage the entire tier. In other words, the processes are peers, and the tier is designed not to have a single point of failure that brings down the whole tier.

For sake of operations reliability and system maintenance, the System Administrator ("Admin") is empowered by the present disclosure to see the system as a collection of unique User-Visible Entities (UVEs). Each UVE has per-tier attributes, which help the Admin to confirm that the tiers are working correctly together or not. But the UVE alone does not have any perprocess representations. When normal operations are taking place, the Admin does not need to be aware how many processes exist in a given tier or what their individual statuses are.

However, the actual operations of the system are happening on a per-tier, per-instance basis. Investigation of some types of complex problems may need examination of execution traces from the individual processes. The present disclosure empowers the Admin to efficiently query process execution traces by use of various UVE, tier and/or other tagging data contained in the traces. The present disclosure empowers the Admin to easily correlate process execution traces to respective UVEs. The present disclosure empowers the Admin to programmatically access UVE state changes and process execution traces and run analysis algorithms that will allow the Admin to catch and/or predict problems automatically, and/or trigger the collection of more information.

In accordance with one aspect of the present disclosure, a special "Analytics Tier" is provided, which the user can connect to for looking at the dedicated UVEs and the massively distributed processes that belong to the respective UVE's. More specifically, the following Data Structure and method may be used:

In the special Analytics Tier, there is automatically defined one Op-State object per UVE that represents the aggregated operational state of the object, and which contains the following:
- key (A Unique Key)
- list of Tier-Op-State (the Op state of this UVE may be provided in that Tier)

Individual Processes in various tiers are not allowed to generate free-form text messages for their process execution trace, in some examples. Instead, in such examples, they are forced to automatically generate objects containing the following information, and send them up to the Analytics Tier:
- key: (Key of the UVE which this execution trace message refers to)
- Tier-Op-State: (Tier-Op-State for this UVE, as seen on this process of the tier)

The Tier-Op-State can be considered to be list of attributes. The value of an attribute can be:
- A basic data type
- A structure (consisting of a list of sub-attributes and/or other sub-structures and sub-containers)
- A container holding multiple items of basic data types, sub-structures or sub-containers.

The schema of "Tier-Op-State" can be different on a per-UVE-per-Tier basis. When a respective process sends its process execution trace, it may choose to fill in only a subset of the attributes rather than all. The reason is that place in the code where the process execution trace is being generated from may not have easy access to all attributes.

Once the respective processes reports are relayed to the centralized Analytics Tier, Analytics Processing may proceed as follows. Different processes in the Analytics Tier may be made responsible for tracking the Operational States of different UVEs, so that the Analytics layer is horizontally scalable. When an analytics process receives a process execution trace object, it updates its view of the aggregated state of the given UVE. This process execution trace object can arrive as an event, or batches of trace objects can be periodically read from a log.

In one example, a Virtual Network System (1000) has at least 3 tiers (in addition to the Analytics Tier). Tier 1 is the Config-Tier (configurators plane 250 in FIG. 7) with a respective one or more virtual machines therein and for sake of this example, 3 processes (A1,A2 and A3) executing in that tier. Tier 2 is ControlPlane-Tier (240) with a corresponding 5 processes (B1-B5) executing in that tier for the sake of this example. Tier 3 is the SDN Forwarding-Tier (230) with 20 processes (C1-C20) executing in that tier for the sake of this example.

Consider now a specific UVE, say one representing a Virtual-Network having the identification of being UV-VNet(1) among a plurality of otherwise identified UVE's (see 207v1-207vn of FIG. 7).

The Tier 3 representation of this example UVE (UV-VNet(1)) may have the following attributes:
int bytes_received;
list<string> virtual_machine_names;

The corresponding Virtual-Network exists on processes C1, C4, C10 and C15 (of the SDN Forwarding-Tier 230); and each sends their versions of these attributes as part of their respective execution traces. For example, some traces report a change in "bytes_received". Other traces report that an element has been added to or deleted from "virtual_machine_names". In response, the analytics process responsible for the identified Virtual-Network (e.g., 207v1) gets these traces. It maintains and updates 4 different Tier-3 snapshots of the respective Virtual-Network (e.g., 207v1). Then, when the analytics process gets a "bytes_received" trace for process C4, it just needs to replace the "bytes_received" attribute for corresponding snapshot C4. But when it gets a "virtual_machine_names" item addition or deletion for process C4, it needs to add or delete from its "virtual_machine_names" attribute for snapshot C4. Thus workload on the Analytics Tier may be minimized for normal process operations.

During process failures or error conditions, it is possible that some process execution traces are "lost". To mitigate this, the method uses sequence numbers on a per-UVE basis for traces sent from a process up to the Analytics layer. If there is a gap in sequence numbers, the analytics layer can ask the process to replay the entire current state of that UVE on that process. Also, in one example, processes explicitly send a trace when a UVE disappears from the process.

Interactions between Admins and/or other users and the Analytics layer (280) may include the following: When the system user asks for the Tier-3 state of this UVE, the request is forwarded to the analytics process responsible for the respective Virtual-Network (e.g., 207v1). This analytics process may present the users with one single view by aggregating the 4 pieces of Op-State snapshots of process C1, C4, C10 and C15 for example. This aggregation method may involve simple addition across these process views (e.g. for "bytes_received"), or a union of sets (e.g. for "virtual_machine_names"), or other operations as well. The Analytics tier can do this on demand (when a user or another program asks for this UVE), or it can do this proactively and periodically.

In view of the above it is seen that a method is provided for realizing the goal of tying together with one or more commonly shared search keys such as a UVEKey, a TRxKey, a PINKey, a VMKey, a PMKey and/or a strata Op-State indicator individual trace logs and/or other automatically generated reports of processes spread across a massively distributed system (e.g., a software defined network (SDN) system 1000) so that those of the reports that are associated with one another by virtue of commonality to a specific UVE and/or Tier and/or virtual machine and/or strata Op-State, etc., may be logically linked together for analysis purposes. The centralized and cross-correlated reports that are automatically created by this method may be used to analyze complex failure modes and even to predict likely failures of particular components before the failures actually happen and to then responsively replace and/or restart the likely-to-fail components and/or to reconfigure resource capacities (e.g., number of VM's, number of PM's, amount of physical memory etc.), to reconfigure interconnects for getting around the likely-to-fail components before the latter actually fail. For instance, this prediction ability may allow system operators to systematically bring down corresponding parts of the system during off-peak hours and to replace and/or fix the likely-to-fail components before actual failure thus minimizing the impact of likely failures on the overall system.

In accordance with the present disclosure, a method is provided for globally analyzing down to the processes level, the components of a massively distributed system and identifying likely at-fault components in such a massively distributed complex system. The method includes one or more of the following steps:
(a) subdividing the system into a plurality of tiers (e.g., 230, 240, 250, 250, 280) each having alike components (e.g., VRouters) within that tier;
(b) subdividing system operations into a plurality of User-Visible Entities (UVE's; e.g., virtual networks or Vnets 207) each having respective processes and other resources dedicated to serving needs of the respective UVE's;
(c) for each respective UVE and tier, identifying respective process reports that cross correlate with a corresponding UVE Key and a corresponding Tier key where the reports may include quantitative failure or fault parameters such as memory failures, telecommunications failures, processor failures, packet resends and/or drops, etc.) and relaying the UVE and Tier tagged reports to a centralized and query-able database;
(d) for each respective process report that is locally generated, automatically tagging the report with one or more linking keys including a UVEKey;
(e) for each respective tier, automatically determining what part of its resources are used by each of respective UVE's and automatically determining if the allocated resources of any UVE are insufficient due to repeated component failures (e.g., lost packets);
(f) for each respective UVE and its detected component failures, logically associating the detected component failures with one or more of the respective captured parameter snapshots that immediately preceded the respective component failures for that UVE;
(g) investigating those of the UVE associated reports that were correlated to failure as being likely to point to the at-fault components and/or tiers of that UVE; and
(h) taking preemptive corrective and/or work-around measures for those of the respective tier components and UVEs that were determined to be more highly likely to enter a failure mode based on the investigation.

Referring to FIG. 8, shown here is a block diagram of an SDN system 1000" that includes, for a respective one of its tiers (e.g., the VRouters tier), a corresponding reports classifier 270 that is coupled to automatically repeatedly (e.g., periodically) receive parameter snapshots 271 indicative of corresponding operating modes of the components (e.g., virtual processes (not shown) in respective ones of the VRouters 232-239) and to automatically tag them. More specifically, during tagging mode each of the parameters snapshots 271 is accompanied has added to it one or more of a respective UVE Key 272, Tier Key 273, VM Key 274, PM key 275 and/or one or more Strata Op-State indicators (e.g., Tier Op State) indicating whether the sample belongs to a failure Op State or a non-failure Op State for example. The tagged reports 279 from the various resources (e.g., servers) of the massively distributed system are then transmitted to a more centralized Analytics engine 285 for structured aggregation (290) according to respective UVE identifications and strata identifications. The aggregated reports may include data that classifies them as belonging to either a normal operations (good) class or as a distressed of failed (bad, e.g., as measured up from a 0% likely to be bad plane to a 100% likely to be bad plane along the Z axis). These aggregated outputs 298 are stored in and used by the corresponding analytics engine 285 to determine what is happening for each UVE and/or tier on a big picture basis. In one example, the corresponding analytics engine 285 is coupled to a re-configuration engine 255 that, in the case where a subsequently received and analyzed parameter snapshots 279 indicate likelihood of failure, re-configures the system so as to preemptively try to avoid failure.

In one example, the Analytics plane collects respective snapshot data relevant to likelihood of failure from various components within the respective UVE's, tiers, planes, physical resources of the system. Respective snapshot data may include for example, parameters like CPU utilization levels, memory utilization levels, alarm levels in the various system parts and so on. These collected respective and likely to be relevant snapshots (279) could be early indicators of growing faults and/or upcoming failures in respective tiers and/or for respective UVE's (e.g., ones that have greater demand for system bandwidths).

While FIG. 8 shows by way of example, the collecting of snapshots from the VRouters tier 232-239 of a respective one server 210z, it is understood that similar collections of respectively relevant and tagged parameter snapshots may be taking place for other tiers and/or system planes and/or servers across the massively distributed system and aggregated into the Analytics engine 285. The XYZ frame work 290 shown in FIG. 8 is for sake of simple illustration of aggregated and classified parameters and it is within the contemplation of the disclosure to have N-dimensional mappings with each axis (e.g., U, V, X, Y, etc.) representing a respective one of the monitored parameters as distributed relative to UVE, relative to tier, relative to physical machine (PM) and so on. Part of the analytic investigation may include that of determining for each tier and UVE what parameters are best indicators of growing faults and/or predictable failures. Trained classification algorithms may afterwards be used to predict the likelihood of failure of the respective components on a continuous basis as the data is being collected by the Analytics for newly instantiated UVE's and virtual processes.

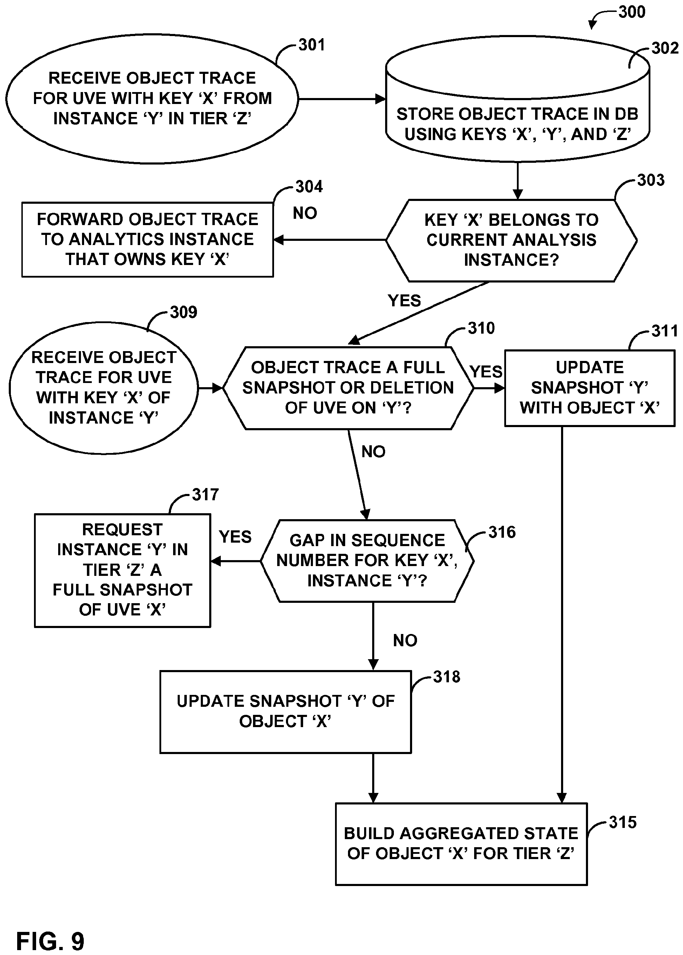

FIG. 9 is a flowchart illustrating an example method 300 that may be carried out, e.g., in the system of FIG. 8. Although generally described with respect to the example of FIG. 8, it should be understood that other devices may be configured to perform any or all of the steps in the method of FIG. 9. For example, virtual network controller 22 may be configured to perform any or all of the steps of the method of FIG. 9. For purposes of explanation, analytics engine 285 of FIG. 8 is explained as performing the steps of FIG. 9.

Initially, analytics engine 285 may receive object trace data for a User-Visible Entity (UVE) with, e.g., key 'X' from instance 'Y' in tier 'Z' (301). That is, the UVE may specify an identifier of 'X' for a key, an identifier of 'Y' for an instance, and an identifier of 'Z' for a tier, where the identifiers X, Y, and Z may comprise respective numeric values (e.g., integer values. Thus, there may be a plurality of tiers, and Z represents the Z^{th} tier, Y represents a Y^{th} instance within tier Z, and X represents a key in the Y^{th} instance of tier Z, for a particular trace. Analytics engine 285 may then store an object trace in a database using keys X, Y, and Z (302). In this manner, keys X, Y, and Z can act as index values for uniquely identifying data for the trace in the database, e.g., for updating, querying, retrieving, or otherwise accessing data for the trace.

Analytics engine 285 may then determine whether key 'X' belongs to a current analysis instance (303). When analytics engine 285 determines that key 'X' for the trace does not belong to the current analysis instance ("NO" branch of 303), analytics engine 285 may forward the created object trace to an analytics instance that owns key 'X' (304). On the other hand, assuming that the current analysis instance owns key 'X,' ("YES" branch of 303), analytics engine 285 may determine whether the object trace is a full snapshot or deletion of a UVE on 'Y' (310), after receiving an object trace for UVE with key 'X' of instance 'Y' (309).

When the object trace is a full snapshot or deletion of the UVE on 'Y' ("YES" branch of 310), analytics engine 285 may update snapshot 'Y' with data of received object 'X' (311). That is, for a full snapshot, analytics engine 285 may replace snapshot 'Y' with the new contents from the object trace. Alternatively, for deletion, analytics engine 285 may remove snapshot 'Y.' In either case, analytics engine 285 may update a sequence number for snapshot 'Y' of Object X. Furthermore, analytics engine 285 may build an aggregated state of object 'X' for tier 'Z' (315). This may involve iterating over all snapshots for Object X and doing appropriate calculations (e.g., taking a sum of values, a union of sets, or the like), to generate aggregate data for Object X. Analytics engine 285 may then display the aggregated state for Object X.

On the other hand, when the object trace is not a full snapshot or deletion ("NO" branch of 310), analytics engine 285 may determine whether there was a gap in sequence numbers for data of the object with key 'X' in instance 'Y' (316). If analytics engine 285 determines that there is such a gap ("YES" branch of 316), analytics engine 285 may request, for instance 'Y' in tier 'Z', a full snapshot of UVE 'X' (317). In this manner, in response to detecting a gap in the sequence numbers for a process of a tier, analytics engine 285 may send instructions to the device that is executing the process to replay a current state for the UVE.

Alternatively, when there is not such a gap ("NO" branch of 316), analytics engine 285 may update snapshot 'Y' of object 'X' (318). This may include, for atomic types of attributes associated with object X, replacing values of the atomic types with new values of the new snapshot. For add or delete notification container types, analytics engine 285 may add, delete, or modify a local copy of the container. For all cases, analytics engine 285 may update the sequence number for snapshot 'Y' of object 'X.' Furthermore, analytics engine 285 may build an aggregated state of object 'X' for tier 'Z' (315). This may involve iterating over all snapshots for Object X and doing appropriate calculations (e.g., taking a sum of values, a union of sets, or the like), to generate aggregate data for Object X. Analytics engine 285 may then display the aggregated state for Object X.

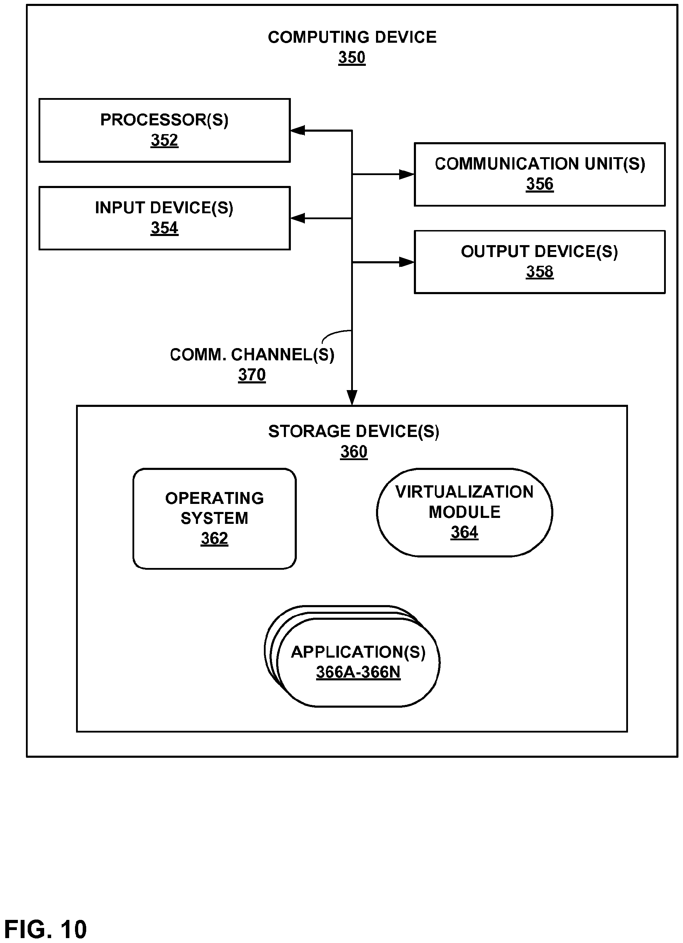

FIG. 10 is a block diagram illustrating an example computing device 350 for aggregating data of various processes, in accordance with one or more techniques of this disclosure. FIG. 10 illustrates only one particular example of computing device 350, and many other examples of computing device 350 may be used in other instances. Computing device 350 may correspond to a virtual network controller. That is, virtual network controllers 22, 100 may include components substantially similar to those illustrated in FIG. 10. Similarly, analytics engine 285 of FIG. 8 may include components substantially similar to those illustrated in FIG. 10. Computing device 350 may be configured to perform any of the various techniques described in this disclosure, e.g., the method of FIG. 9.

As shown in the specific example of FIG. 10, computing device 350 includes one or more processors 352, one or more communication units 356, one or more input devices 354, one or more output devices 358, and one or more storage devices 360. Computing device 350, in the specific example of FIG. 10, further includes operating system 362, virtualization module 364, and one or more applications 366A-366N (collectively "applications 366"). Each of components 352, 356, 354, 358, and 360 may be interconnected (physically, communicatively, and/or operatively) for inter-component communications. As one example in FIG. 10, components 352, 356, 354, 358, and 360 may be coupled by one or more communication channels 370. In some examples, communication channels 370 may include a system bus, network connection, interprocess communication data structure, or any other channel for communicating data. Virtualization module 364 and applications 366, as well as operating system 362 may also communicate information with one another as well as with other components in computing device 350.

Processors 352, in one example, are configured to implement functionality and/or process instructions for execution within computing device 350. For example, processors 352 may be capable of processing instructions stored in storage devices 360. Examples of processors 352 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 360 may be configured to store information within computing device 350 during operation. Storage devices 360, in some examples, are described as a computer-readable storage medium. In some examples, storage devices 360 are a temporary memory, meaning that a primary purpose of storage devices 360 is not long-term storage. Storage devices 360, in some examples, are described as a volatile memory, meaning that storage devices 360 do not maintain stored contents when the computer is turned off. Examples of volatile memories include random access memories (RAM), dynamic random access memories (DRAM), static random access memories (SRAM), and other forms of volatile memories known in the art. In some examples, storage devices 360 are used to store program instructions for execution by processors 352. Storage devices 360, in one example, are used by software or applications running on computing device 350 (e.g., operating system 362, virtualization module 364 and the like) to temporarily store information during program execution.

Storage devices 360, in some examples, also include one or more computer-readable storage media. Storage devices 360 may be configured to store larger amounts of information than volatile memory. Storage devices 360 may further be configured for long-term storage of information. In some examples, storage devices 360 include non-volatile storage elements. Examples of such non-volatile storage elements include magnetic hard discs, tape cartridges or cassettes, optical discs, floppy discs, flash memories, or forms of electrically programmable memories (EPROM) or electrically erasable and programmable memories (EEPROM).

Computing device 350, in some examples, also includes one or more communication units 356. Communication units 356 represent examples of network interfaces for communicating with external devices, e.g., devices of an SDN that execute various processes, e.g., processes conforming to various tiers, as discussed above. Computing device 350, in one example, utilizes communication units 356 to communicate with external devices. Communication units 356 may communicate, in some examples, by sending data packets over one or more networks, such as one or more wireless networks, via inbound and outbound links. Communication units 356 may include one or more network interface cards (IFCs), such as an Ethernet card, an optical transceiver, a radio frequency transceiver, or any other type of device that can send and receive information. Other examples of such network interfaces may include Bluetooth, 3G and WiFi radio components. In some examples, computing device 350 utilizes communication units 356 to receive data regarding processes executed by external devices, which processors 352 may aggregate in accordance with the techniques of this disclosure.

Computing device 350, in one example, also includes one or more input devices 354. Input devices 354, in some examples, are configured to receive input from a user through tactile, audio, or video feedback. Examples of input devices 354 include a presence-sensitive display, a mouse, a keyboard, a voice responsive system, video camera, microphone or any other type of device for detecting a command from a user. In some examples, a presence-sensitive display includes a touch-sensitive screen.

One or more output devices 358 may also be included in computing device 350. Output devices 358, in some examples, are configured to provide output to a user using tactile, audio, or video stimuli. Output devices 358, in one example, include a presence-sensitive display, a sound card, a video graphics adapter card, or any other type of device for converting a signal into an appropriate form understandable to humans or machines. Additional examples of output devices 358 include a speaker, a cathode ray tube (CRT) monitor, a liquid crystal display (LCD), or any other type of device that can generate intelligible output to a user.

Computing device 350 may include operating system 364. Operating system 364, in some examples, controls the operation of components of computing device 350. For example, operating system 364, in one example, facilitates the communication of modules applications 366 with processors 352, communication units 356, input devices 354, output devices 358, and storage devices 362. Applications 366 may each include program instructions and/or data that are executable by computing device 350. As one example, application 366A may include instructions that cause computing device 350 to perform one or more of the operations and actions described in the present disclosure.

In accordance with techniques of the present disclosure, computing device 350 may be configured to aggregate data for a set of two or more related processes, to form aggregated data for the set of two or more related processes. In particular, computing device 350 may determine the set of two or more related processes executed by respective devices in a virtual network, and receive data for the set of two or more related processes. In general, the set of processes may correspond to a common "tier," e.g., a common network plane, and each of the processes in a particular set may be substantially similar.

More particularly, in accordance with the techniques of this disclosure, computing devices communicatively coupled to computing device 350 via communication units 356, and processes executed by the computing devices, may be divided into various tiers. Within each tier there may be a set of related (e.g., substantially similar) processes. Furthermore, computing device 350 may define User-Visible Entities (UVEs) for the various tiers. The UVEs may define various data for monitoring processes of the various tiers. For example, the UVEs may define attributes of processes to retrieve. Computing device 350 may receive data output during execution of the processes, and in accordance with the UVEs, extract values for the attributes defined by the UVEs. Computing device 350 may further aggregate this data. For example, the UVE may define a manner in which to aggregate certain types of data, corresponding to the attributes, such as addition, union over sets, concatenation, list generation, or the like.

Computing device 350 may then generate one or more reports that are indicative of a tier and aggregated values for one or more attributes corresponding to the tier, as defined by a corresponding UVE. This aggregation can be performed transparently to the devices executing the processes. That is, the devices executing the processes need not take any part in the aggregation. An administrator may use the generated report to diagnose various aspects of the virtual network. For example, the report may include data indicative of one or more of a quantitative failure, a fault parameter, a memory failure, a telecommunications failure, a processor failure, a packet resend, and/or a dropped communication session. The administrator may determine, using the report, whether any or all of these conditions apply and act accordingly, e.g., by reprogramming a device communicatively coupled to computing device 350 via communication units 356, adding, replacing, or removing links between devices, adding or upgrading software for one or more devices, or the like, based on the contents of the report.

In some examples, computing device 350 includes an analytics layer, that is, an intermediate layer that acts on generic rules. The UVEs may define rules in accordance with the analytics layer. Thus, computing device 350 may operate substantially automatically, that is, without user interference, to perform the techniques of this disclosure. The analytics tier may use definitions of the UVEs to extract information from communications output by the devices executing the corresponding processes and aggregate values for certain attributes, as defined by the UVEs, of the communications.

In this manner, computing device 350 represents an example of a controller device configured to determine, for a virtual network, a set of two or more related processes executed by respective devices in the virtual network, receive data for the set of two or more related processes, and aggregate the data for the set of two or more related processes to form aggregated data for the set of two or more related processes.

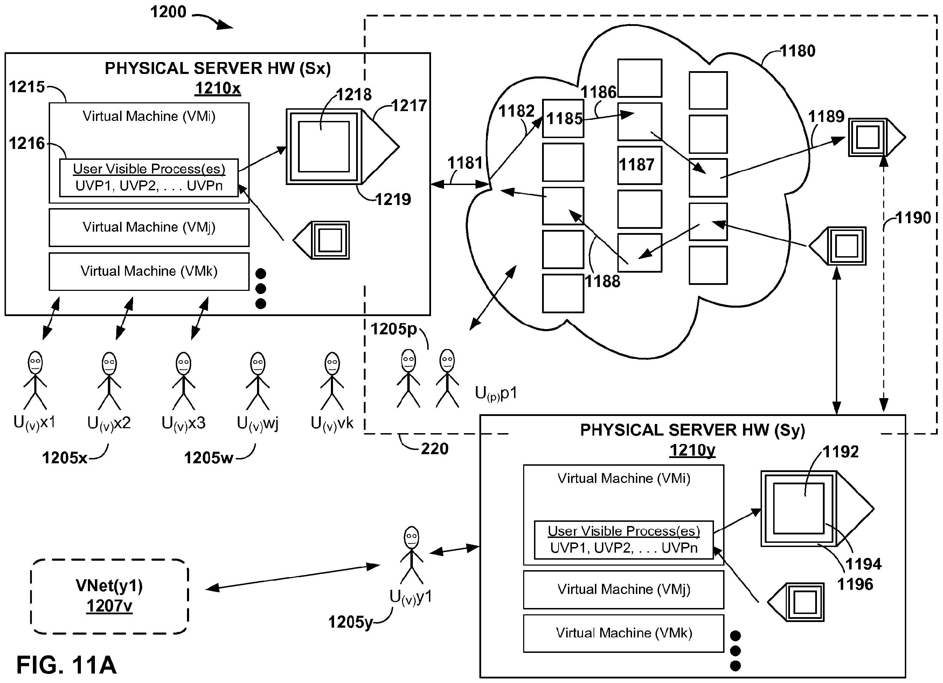

FIG. 11A is a block diagram of a massively distributed complex system 1200, and more specifically, of a software defined networking (SDN) system that operates according to techniques described in this disclosure. System 1200 may represent an example instance of network 8 of FIG. 1. That is, system 1200 may represent a cloud-implementing data center environment in which there is provided a large collection of network-interconnected servers (e.g., 1210x, 1210y) that provide compute and/or storage capacity to run many different user and/or other kinds of application programs (e.g., user visible process(es) 1216). Such an environment tends to be very dynamic from an applications point of view. System 1200 may include level of automation that, at least to some extent, insulates users from the infrastructure details and that avoids need for manual intervention to interconnect the physical servers to provide the compute or storage capacity required to enable the various applications to execute to one level of sufficiency or another.

In order to enable automation and agility of the infrastructure (e.g., the physical interconnect fabric 1180), there is a growing trend to deploy either an overlay networking solution or a virtualized networking system on top of physical compute clusters where the overlay and/or virtualizing subsystem encapsulates and automatically manages the details of keeping the many physical network switches and routers (e.g., 1185, 1187) and channels (e.g., 1186) up and running at desired bandwidths (BW) and desired qualities of service (QoS) represented here by 1110. Fabric 1180 may represent an example of fabric 14 of FIG. 1 and may include physical telecom channels, routers, gates, etc.

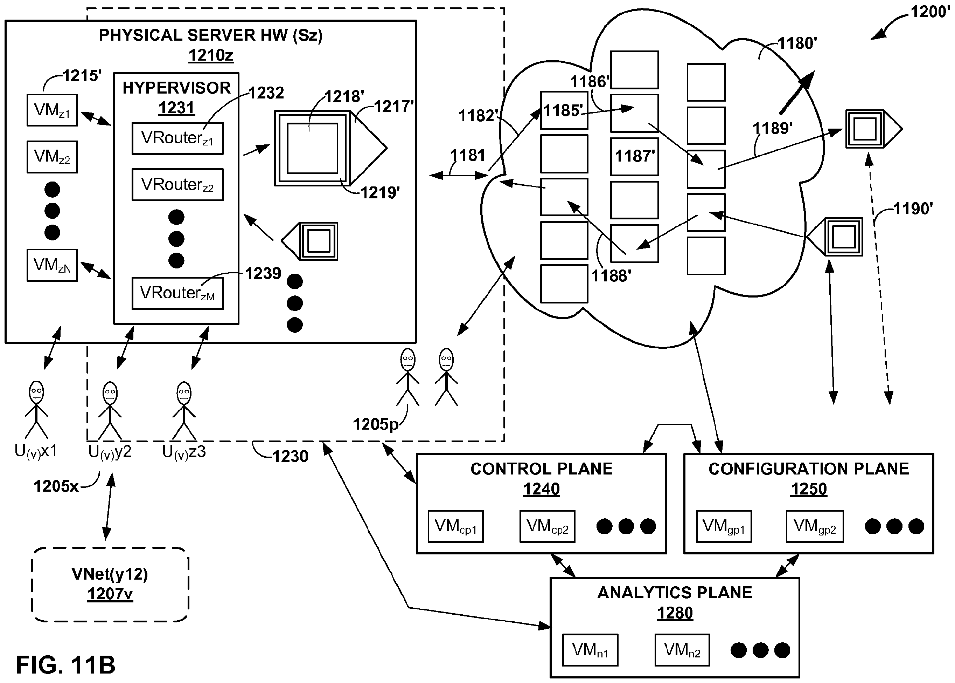

In such an environment, a server (e.g., 1210x) may run one or more applications and/or guest operating systems. In order to enable many guest operating systems (also called virtual machines (VMs) 1215) on a single server 1210, there may be usage of a virtual machines monitoring system commonly known as hypervisor (such as ESX, Hyper-V, KVM, Xen, etc.). Examples of hypervisors are illustrated as hypervisor 31 of FIG. 1 and 1231 of FIG. 11B. A single application (e.g., user visible process UVP1 1216) executing on a VM 215 may require many instances of compute and storage resources that may be provided by the infrastructure as multiple individual servers 1210 or multiple virtual machines 1215 running on one or more servers 1210. In order for the application to share information amongst its distributed compute and storage instances and with the outside world, a telecommunications network 1180 enables movement of this information as; for example, packet conveyed data signals 1217. Every time a new application is instantiated and/or changed on the infrastructure, a respective virtual network (e.g., VNet 1207v) may be created and/or changed to support the new/changed application and to allow all its compute and storage instances to share information with one another and/or the outside world. Each virtual network user 1205, or VUser 1205, may experience his/her/its own Virtual Network (VNet) 1207 with its respective resources and issues, etc.

In a virtualized or overlay network environment, the edge of the network is extended from the physical network element (e.g., switch or a router 1185) to a software switch (e.g., VRouter 1232 shown in FIG. 11B) running inside the hypervisor (1231) or inside the host operating system on the physical server (e.g., 1210z) to provide a telecom virtualizing interface (VTI) 1220. VRouter 1232 may represent an example instance of software switches 30 of FIG. 2. The virtualized and/or overlayed network that is used by the application to communicate with its instances is created dynamically and managed by software switch controlling means (e.g., control plane VMs 1112 of FIG. 5 or control plane 1240 of FIG. 11B) having its own addressing and security scheme where the latter is orthogonal from the physical network 1180 and its addressing scheme. There are many different methods that can be employed to transport packets (e.g., 1217) within and across the virtual network(s) and over the physical network.

Network IP (and/or Ethernet) packets (e.g., 1217) generated or consumed by the instances of the application in the virtual network domain may be encapsulated in another IP (and/or Ethernet) packet that is transported by the physical network. Herein, the virtual network packet will be referred to as inner packet and the physical network packet will be referred to as outer packet. The function of encapsulation and/or de-capsulation of the virtual network packet within physical network packet is done in the hypervisor 1231 or the host O/S (not shown) running on the server 1210. In addition, the encapsulation and de-capsulation function can also be performed at the edge of the network in a first-hop physical network switch router (e.g., 1185).

Cloud data-center networks can constitute an example of a massively distributed complex system because the number of interconnected servers can be very large with each server presenting one or more links, each having a respective 1Gbps or 10Gbps or greater bandwidth link. In order to construct a network that can interconnect all such links, operators generally use a number of switches (or routers) with N input (ingress) links x M output (egress) links. Each of these individual switches can act as an IP router with its own IP address(es).

Referring to some of the specifics shown in FIGS. 11A-11B, there can be a plurality of different kinds of components in respective "tiers" or service planes of a virtualized overlay system. One of these planes is the virtual-to-physical forwarding plane 1230. It includes the virtual network routers (VNRouters, or more simply VRouters 1232-1239). These components can reside in the respective hypervisors 231 of the respective physical servers (e.g., 1210) or they can reside in a Top-of-Rack switch (not shown) which is typically included in the virtual-to-physical forwarding plane 1230. When the VRouter is disposed in a hypervisor 1231, it acts as a software switch having both respective virtual ports connected to the virtual machines (VMs) and physical ports corresponding to the physical I/O ports of the respective server 1210. Each VNRouter selectively routes/switches packets between its virtual ports and the physical ports and/or between its virtual ports. The VNRouters may be considered as Data/Forwarding Plane components of the Virtual Network System.

Another of the plural tiers or planes within system 1200 is referred to as the Control Plane 1240 and it may contain a plurality of virtual machines (VMcp-i) implementing respective Controllers or Controller Processes. Controllers may represent instances of control plane VMs 112 of FIG. 5 that provide control functions within the Virtual Network System. The Controllers each operatively couples to a respective set of VNRouters and each distributes respective routing information signals to its VNRouters. In one embodiment, the relative scale of the Virtual Network System is on the order of 100s of 1000s of VNRouters (e.g., 1232) and 100s of corresponding Controllers (e.g., VNcp1).

Another of the plural tiers or planes within system 1200 is referred to as the Configuration Plane 1250 and it may contain a plurality of virtual machines (VMgp-k) implementing respective Configuration Processes. Controllers may represent instances of configuration VMs 108 of FIG. 5 that provide control functions with respect to interconnect and/or other configurations within the Virtual Network System. The Configuration controllers each operatively couples to a respective parts of the physical network (1180) and/or to respective parts of the Control Plane 1250 and each distributes respective configuration information signals to its controlled counterparts.

Yet another of the plural tiers or planes within the system 1200 is referred to as the Analytics plane 1280. Components (e.g., VMn1) within the Analytics plane 1280 are typically charged with automatically monitoring and/or automatically collecting reported states of other parts of the Virtual Network System. Components within the Analytics plane 1280 may represent instances of analytics VMs 104 of FIG. 5. The Analytics components are tasked with gathering information from all other components in the system so as to develop a high-level view of what is occurring in the system as a whole. This "Big Data" information may be stored in a persistent database, e.g., analytics VM 106 of FIG. 5. This information can then be used to show the current state of the system, to help debug problems, to do historical or real-time analysis of the system and so on.

Because of the highly scalable and variable nature of system 1200, it may be prone to many fault and failure modes. However, an administrator(s) of system 1200 seeks to provide its users (e.g., 1205x, 1205y, 1205w, 1205z) with continuously robust, reliable, high bandwidth, and high quality services. In other words, the system 1200 should be resilient and continue to operate at near peak capability despite isolated failures in various ones of its components. The various components that desirably remain failure free and/or are configured to work around known or expected failure modes include the different kinds of components in the respective and different tiers or planes, including the forwarding plane 1230, the control plane 1240, the configuration plane 1250 and even the global analytics plane 1280.

To realize these goals, it would be useful to have an ability to predict likely failures of particular components before the failures actually happen and to responsively replace and/or restart the likely-to-fail components and/or reconfigure interconnects around the likely-to-fail components before the latter actually fail. For instance, this prediction ability may allow system operators to systematically bringing down corresponding parts of the system during off-peak hours and to replace and/or fix the likely-to-fail components before actual failure thus minimizing the impact of likely failures on the overall system.

In accordance with the present disclosure, a method is provided for identifying likely faulty components in a massively distributed complex system that includes one or more of the following steps:
(a) subdividing the system into a plurality of tiers (e.g., 1230, 1240, 1250, 1280) each having alike components (e.g., VRouters) within that tier;
(b) for each respective tier, identifying respective quantitative parameters (e.g., memory failures per unit time, processor failures per unit time, channel failures per unit time, packet resends and/or drops per unit time, etc.) of respective components of the respective tier whose quantitative values are likely to act as indicators of component fault and/or failure in that respective tier;
(c) for each respective tier, automatically repeatedly capturing sample snapshots of the identified respective quantitative parameters of the tier component(s);
(d) for each respective tier, automatically repeatedly detecting component failures (e.g., lost packets);
(e) for each respective detected component failure, logically associating the detected component failure with one or more of the respective captured parameter snapshots that immediately preceded the respective component failure;
(f) automatically repeatedly training a trainable automated classifier to develop a classifying structure that distinguishes between first component parameter sets that logically associate with one or more detected failures and second component parameter sets that do not logically associate with the one or more detected failures;
(g) after said training, placing the trained classifier in a prediction mode wherein the trained classifier is automatically repeatedly fed with the more recent and automatically repeatedly captured sample snapshots and wherein the trained classifier uses its developed classifying structure (e.g., class separation surface described below) to classify the in-prediction-mode sample snapshots as correlating to failure or as correlating to non-failure;
(h) investigating those of the in-prediction-mode sample snapshots that were correlated to failure as being likely to be fault-indicating parameter sets; and
(i) taking preemptive corrective and/or work-around measures for those of the respective tier components that were determined to be more highly likely to enter a failure mode based on the in-prediction-mode indication that the corresponding sample snapshots correlate to failure.

Also in accordance with techniques of this disclosure, a massively distributed complex system is provided as having a plurality of tiers and having a fault and/or failure predicting mechanism, the predicting mechanism comprising one or more of:
(a) a subdividing mechanism that subdivides the system into a plurality of tiers each having alike components;
(b) a parameters identifying mechanism that, for each respective tier, identifies respective quantitative parameters of respective components of the respective tier whose quantitative values are likely to act as indicators of likely component fault and/or failure;
(c) a sampling mechanism that, for each respective tier, automatically repeatedly captures sample snapshots of the identified respective quantitative parameters of the tier component(s);
(d) a failure detecting mechanism that, for each respective tier, automatically repeatedly detects component failures;
(e) a failure to parameters associating mechanism that, for each respective detected component failure, logically associates (e.g., flags) the detected component failure with one or more of the respective captured parameter snapshots that immediately preceded the respective component failure;
(f) a training mechanism that automatically repeatedly trains a trainable automated classifier to develop a classifying structure that distinguishes between first component parameter sets that logically associate with a detected failure and second component parameter sets that do not logically associate with a detected failure;
(g) a predictions generating mechanism that, after said training, places the trained classifier in a prediction mode wherein the trained classifier is automatically repeatedly fed with the automatically repeatedly captured sample snapshots and wherein the trained classifier uses its developed classifying structure to classify the in-prediction-mode sample snapshots as correlating to likely failure or as correlating to likely non-failure;
(h) a likely fault and/or failure investigating mechanism that follows up on those of the in-prediction-mode sample snapshots that were correlated to failure as being likely to be fault-indicating parameter sets; and
(i) an action taking mechanism that preemptively takes corrective and/or work-around measures for those of the respective tier components that were determined to be more highly likely to enter a failure mode based on the in-prediction-mode indication that the corresponding sample snapshots correlate to failure.

There are various kinds of trainable automated classifiers that can be trained to classify input data sets as belonging to one of a plurality of distinct (e.g., mutually exclusive) classes. One example is neural nets. Another example is that of so-called, Support Vector Machines (SVMs). These automated machines include supervised learning models with associated learning algorithms that analyze supplied sample data and recognize patterns of distinction in the supplied data samples (e.g., reference sets) and use the analysis for developing classification and regression analysis models. A basic SVM takes in a first set of reference input data together with predetermined classification for the first set of reference input data and produces one or more classifying models for the supplied reference input data. Then after such a learning mode, the SVM takes in a second set of non-referenced input data (data that generally does not come with predetermined classification therefor) and it predicts, for each given one of the second input data sets, which of two or more possible classes the input data belongs to. In the case of the present disclosure, it is assumed that there are two mutually exclusive classes, one being that of highly likely to fail (e.g., due to a growing fault) and the second being that of not highly likely to fail. Such an SVM can be viewed as being a non-probabilistic binary linear classifier. Given a set of training examples, each marked as belonging to one of two categories, an SVM training algorithm builds a model that subsequently (after training) assigns new examples into one category (e.g., likely to fail) or the other (e.g., not likely to fail).

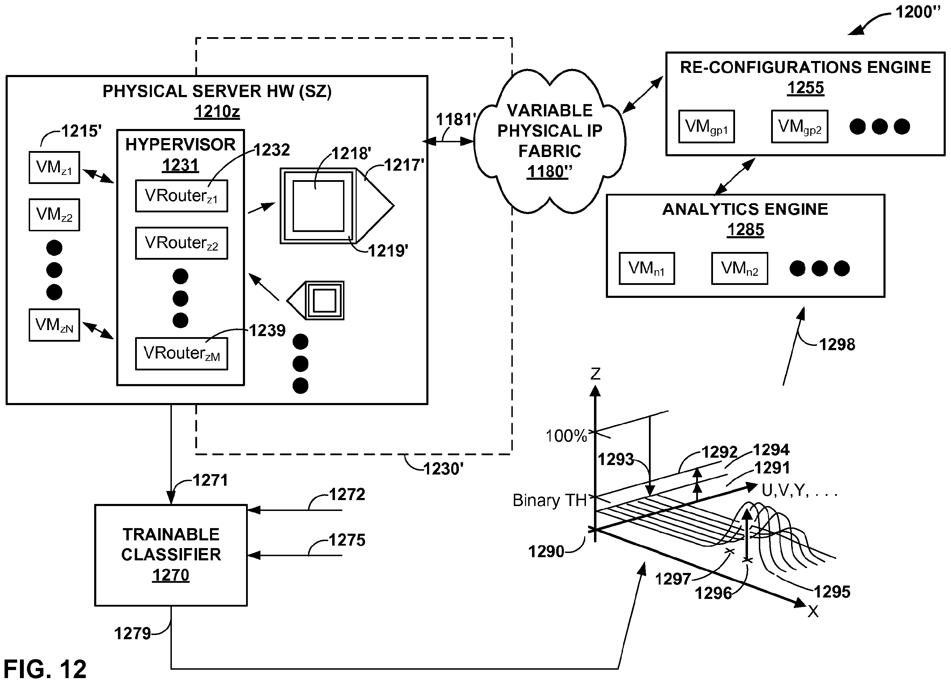

FIG. 12 is a block diagram of an system 1200" that includes, for a respective one of its tiers (e.g., the VRouters tier), a corresponding trainable classifier (e.g., SVM) 1270 that is coupled to automatically repeatedly (e.g., periodically) receive parameter sets or "snapshots," e.g., VR parameter snapshots 1271, indicative of corresponding operating modes of the components (e.g., the VRouters 1232-1239) that are being watched for possible entry into a significant fault or highly likely failure mode. More specifically, during a training mode (signaled on line 1275 signaling either training mode or prediction mode for trainable classifier 1270), each parameters snapshot 1271 is accompanied by a training-mode classification signal 1272 indicating whether the sample belongs to the failure class or the non-failure class. In response to repeated training sessions, the trainable classifier 1270 develops an internal algorithm (represented by classification separation surface 1295) that classifies subsequently received parameter snapshots 1271(T2) as belonging to either the likely good class (1293 as measured down from the 100% likely bad plane to surface 1295) or the likely bad class (1291 as measured up from the 0% likely bad plane to surface 1295), where the TH plane can be disposed above troughs of surface 1295 by Tolerance amount TOL 1294). This output 1298 (e.g., a binary signal indicating surface 1295 is above or below the TH plane 1292) is coupled to a corresponding analytics engine 1285 that determines what to do in response to the classification determination. On framework 1290, spot 1297 denotes a recent input spot and spot 1296 denotes a trained bad spot. The corresponding analytics engine 1285 may be coupled to a re-configuration engine 1255 that, in the case where a subsequently received parameter snapshots 1271(T2) indicates likelihood of failure, re-configures the system so as to try to avoid the failure.

In some examples, the Analytics plane includes analytics engine 1285 to collect respective snapshot data relevant to likelihood of failure from various components within the respective tiers and/or planes of the system. Respective snapshot data may include for example, parameters like CPU utilization levels, memory utilization levels, alarm levels in the various system parts, number of peers of a protocol session, number of protocol sessions for a component, and so on. These collected respective and likely to be relevant snapshots 1271 could be early indicators of growing faults and/or upcoming failures. The Analytics plane will also collect the failure data of various components where the latter are training reference points. For instance, a connection failure to a component and a subsequent reconnection with a restart data would indicate to the Analytics plane that the respective component has gone down (failed) and needed to be restarted or replaced.

Analytics plane may collect respective snapshot data from various components using SDN techniques. Examples of SDN techniques are described in SOFTWARE-DEFINED MOBILE CORE, U.S. Patent Appl. No. 13/724,975, filed December 21, 2012. As described above with VNCs 22, 100, a distributed network controller may operate as a control plane for at least some control plane functionality of components, such as servers and chassis/TOR switches, and receive snapshot data by a SDN communication protocol that also transports control plane configuration information. Examples of the SDN communication protocol include XMPP, described for instance with respect to FIG. 5, and OpenFlow.

While FIG. 12 shows, by way of example, the collecting of snapshots from the VRouters tier 1232-1239 of a respective one server 1210z, it is to be understood that similar collections of respectively relevant parameter snapshots and development of classification surfaces 1295 for each will be taking place for other tiers and/or system planes and/or servers. It is to be appreciated that the developed classification surfaces 1295 of each monitored component tier may not be accessible in certain kinds of classifiers such as neural nets. As the above input data samples 1271, 1272 are input as training and/or prediction parameters to the respective SVM algorithms, the latter learn and/or indicate whether the respective component falls in one of two categories - likely good 1293 or likely failing 1291. The shape of the classification surface 1295 may be a function of a predetermined binary threshold level TH 1292 and/or a partitioning (not shown) of the XY plane. The XYZ framework 1290 shown in FIG. 12 is for the sake of simple illustration and other frameworks according to this disclosure may have N-dimensional mappings with each axis (e.g., U, V, X, Y, etc.) representing a respective one of the monitored parameters. Part of learning is that of determining for each tier those parameters that are best indicators of growing faults and/or predictable failures. The trained classification algorithm (e.g., one that uses classification surface 1295) is afterwards used to predict the likelihood of failure of the respective components on a continuous basis as the data is being collected by the Analytics plane. The learning algorithms can also be enhanced on a continuous basis by adding/changing input parameters, thresholds, parameter space partitionings, etc.

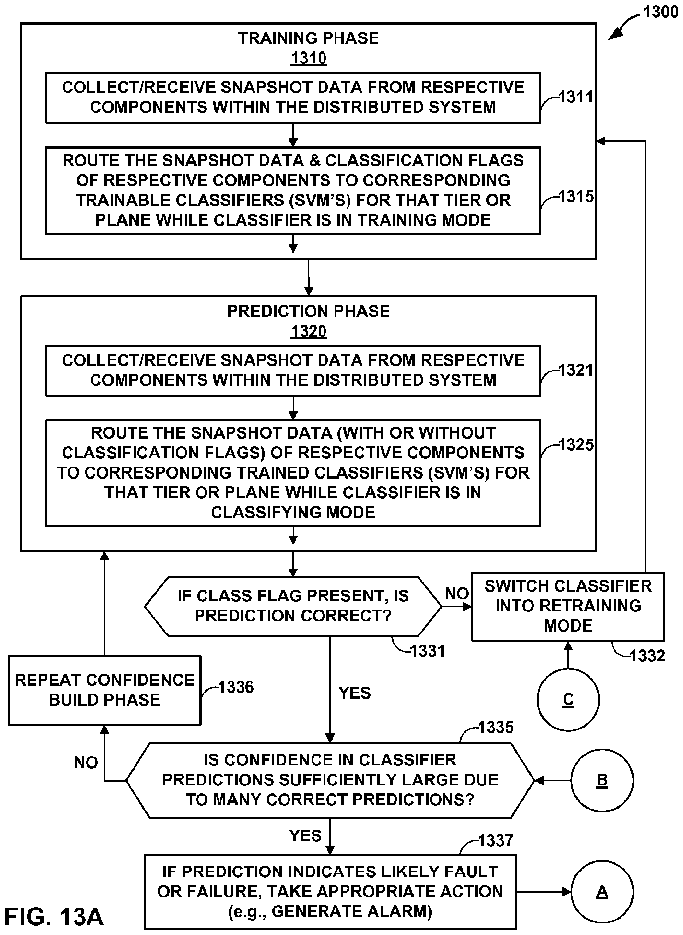

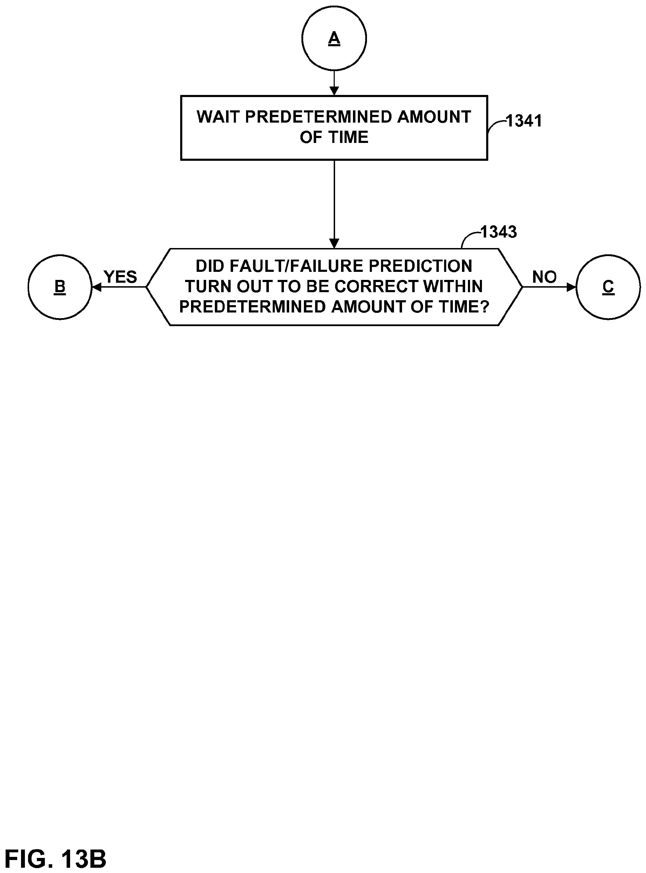

FIGS. 13A-13B provide a flowchart of a process 1300 that may be carried out in the system of FIG. 12. Portion 1310 corresponds to the training mode/phase. Analytics engine 1285 receives parameter snapshots data 1271 for components of system 1200 (1311). Analytics engine 1285 provides parameter snapshots data 1271 and classification flags of respective components, e.g., training-mode classification signal 1272, to trainable classifier 1270 while trainable classifier 1270 is in training mode (1315).

Portion 1320 corresponds to the prediction mode. Analytics engine 1285 receives parameter snapshots data 1271 for components of system 1200 (1321). Analytics engine 1285 provides parameter snapshots data 1271 and classification flags of respective components, e.g., training-mode classification signal 1272, to trainable classifier 1270 while trainable classifier 1270 is in classifying mode (1325).

Portion 1330 corresponds to a confidence building and action mode. Upon a prediction, if a class flag is present and the prediction is not correct (NO branch of 1331), analytics engine 1285 may switch trainable classifier 1270 to retraining mode (1332). If (YES branch of 1331), if the confidence in trainable classifier 1270 prediction is not sufficiently large due to many correct predictions (NO branch of 1335), the analytics engine 1285 and trainable classifier 1270 repeat the confidence build phase (1336). Otherwise (YES branch of 1335), if the prediction indicates likely fault or failure, then analytics engine 1285 takes appropriate action, which may include generating an alarm, sending a message to an administrator, etc. (1337). Analytics engine 1285 then waits a predetermined amount of time (1341) to determine whether the fault/failure prediction was correct within the time (1343). If not (NO branch of 1343), analytics engine 1285 may switch trainable classifier 1270 to retraining mode (1332). If the prediction was correct (YES branch of 1343), the process moves to step 1335.

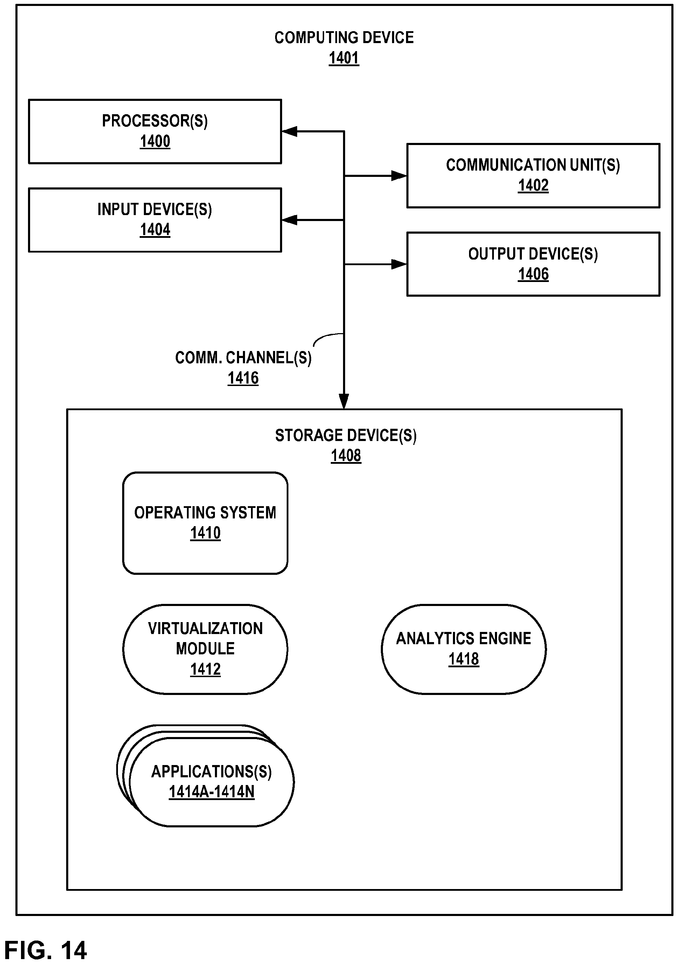

FIG. 14 is a block diagram illustrating an example device that participates in identifying likely faulty components according to techniques described in this disclosure. FIG. 14 illustrates only one particular example of computing device 1401, and many other examples of computing device 1401 may be used in other instances.

As shown in the specific example of FIG. 14, computing device 1401 includes one or more processors 1400, one or more communication units 1402, one or more input devices 1404, one or more output devices 1406, and one or more storage devices 1408. Computing device 1401, in the specific example of FIG. 14, further includes operating system 1410, virtualization module 1412, and one or more applications 1414A-1414N (collectively "applications 1414"). Each of components 1400, 1402, 1404, 1406, and 1408 may be interconnected (physically, communicatively, and/or operatively) for inter-component communications. As one example in FIG. 14, components 1400, 1402, 1404, 1406, and 1408 may be coupled by one or more communication channels 1416. In some examples, communication channels 1416 may include a system bus, network connection, interprocess communication data structure, or any other channel for communicating data. Virtualization module 1412 and applications 1414, as well as operating system 1410 may also communicate information with one another as well as with other components in computing device 1401.

Processors 1400, in one example, are configured to implement functionality and/or process instructions for execution within computing device 1401. For example, processors 1400 may be capable of processing instructions stored in storage devices 1408. Examples of processors 1400 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 1408 may be configured to store information within computing device 1401 during operation. Storage devices 1408, in some examples, are described as a computer-readable storage medium. In some examples, storage devices 1408 are a temporary memory, meaning that a primary purpose of storage devices 1408 is not long-term storage. Storage devices 1408, in some examples, are described as a volatile memory, meaning that storage devices 1408 do not maintain stored contents when the computer is turned off. Examples of volatile memories include random access memories (RAM), dynamic random access memories (DRAM), static random access memories (SRAM), and other forms of volatile memories known in the art. In some examples, storage devices 1408 are used to store program instructions for execution by processors 1400. Storage devices 1408, in one example, are used by software or applications running on computing device 1401 (e.g., operating system 1410, virtualization module 1412 and the like) to temporarily store information during program execution.

Storage devices 1408, in some examples, also include one or more computer-readable storage media. Storage devices 1408 may be configured to store larger amounts of information than volatile memory. Storage devices 1408 may further be configured for long-term storage of information. In some examples, storage devices 1408 include non-volatile storage elements. Examples of such non-volatile storage elements include magnetic hard discs, tape cartridges or cassettes, optical discs, floppy discs, flash memories, or forms of electrically programmable memories (EPROM) or electrically erasable and programmable memories (EEPROM).

Computing device 1401, in some examples, also includes one or more communication units 1402. Computing device 1401, in one example, utilizes communication units 1402 to communicate with external devices. Communication units 1402 may communicate, in some examples, by sending data packets over one or more networks, such as one or more wireless networks, via inbound and outbound links. Communication units 1402 may include one or more network interface cards (IFCs), such as an Ethernet card, an optical transceiver, a radio frequency transceiver, or any other type of device that can send and receive information.

Computing device 1401, in one example, also includes one or more input devices 1404. Input devices 1404, in some examples, are configured to receive input from a user through tactile, audio, or video feedback. Examples of input devices 1404 include a presence-sensitive display, a mouse, a keyboard, a voice responsive system, video camera, microphone or any other type of device for detecting a command from a user. In some examples, a presence-sensitive display includes a touch-sensitive screen.

One or more output devices 1406 may also be included in computing device 1401. Output devices 1406, in some examples, are configured to provide output to a user using tactile, audio, or video stimuli. Output devices 1406, in one example, include a presence-sensitive display, a sound card, a video graphics adapter card, or any other type of device for converting a signal into an appropriate form understandable to humans or machines. Additional examples of output devices 1406 include a speaker, a cathode ray tube (CRT) monitor, a liquid crystal display (LCD), or any other type of device that can generate intelligible output to a user.

Computing device 1401 may include operating system 1412. Operating system 1412, in some examples, controls the operation of components of computing device 1401. For example, operating system 1412, in one example, facilitates the communication of modules applications 1414 with processors 1400, communication units 1402, input devices 1404, output devices 1406, and storage devices 1410. Applications 1414 may each include program instructions and/or data that are executable by computing device 1401. As one example, application 1414A may include instructions that cause computing device 1401 to perform one or more of the operations and actions described in the present disclosure.

In accordance with techniques of the present disclosure, computing device 1401 may include an analytics engine 1418 application to identify likely faulty components. Analytics engine 1418 may represent an example instance of analytics engine 1285. Analytics engine 1418 may include a trainable classifier that receives parameter snapshots indicative of corresponding operating modes of the components that are being watched for possible entry into a significant fault or highly likely failure mode. More specifically, during a training mode, each parameters snapshot is accompanied by a training-mode classification signal indicating whether the sample belongs to the failure class or the non-failure class. In response to repeated training sessions, the trainable classifier develops an internal algorithm that classifies subsequently received parameter snapshots as belonging to either the likely good class or the likely bad class, where the TH plane can be disposed above troughs of surface by a tolerance amount. Analytics engine 1418 determines an appropriate response to the classification determination. Computing device 1401 may be coupled to a re-configuration engine that, in the case where a subsequently received parameter snapshots indicates likelihood of failure, re-configures the system so as to try to avoid the failure in response to direction or component fault indications from analytics engine 1418.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

In addition to or as an alternative to the above, the following embodiments are described. The features described in any of the following embodiments may be utilized with any of the other embodiments described herein.

The invention is directed to a method comprising determining, by a controller device for a virtual network, a set of two or more related processes executed by respective devices in the virtual network; receiving, by the controller device, data for the set of two or more related processes from the respective devices; and aggregating, by the controller device, the data for the set of two or more related processes to form aggregated data for the set of two or more related processes.

In some embodiments, the method may also comprise presenting the aggregated data to a user.

In the invention, the aggregated data comprises data for a User-Visible Entity (UVE).

In the invention the UVE defines one or more attributes for which values are to be extracted from the received data for the set of two or more related processes, and aggregating comprises: extracting values for the one or more attributes defined by the UVE; and aggregating the values for the one or more attributes.

In the invention, the UVE defines the one or more attributes for a tier in which the set of two or more related processes are executed.

In some embodiments, the tier comprises a respective service plane.

In some embodiments, the tier comprises one of a plurality of tiers, and wherein each of the plurality of tiers is associated with a respective UVE.

In some embodiments, the plurality of tiers include one or more of a control plane tier, an analytics tier, a configuration tier, and a software defined network (SDN) forwarding tier.

In some embodiments, the UVE comprises a UVE for the SDN forwarding tier, and wherein the UVE defines a bytes received attribute and a virtual machine names attribute.

In some embodiments, the plurality of tiers are arranged in a hierarchical fashion.

In some embodiments, each of the tiers includes a respective set of processes, and each of the processes for a common one of the tiers is substantially similar.

In some embodiments, the method may further comprise: for each of the tiers, determining resources of the virtual network used by the respective UVEs; and automatically determining whether the resources for one of the UVEs are insufficient based on a number of repeated failures associated with the one of the UVEs.

In some embodiments, the method may further comprise: for each of the UVEs, in response to detecting a failure of a component associated with the UVE, logically associating the failed component with values for one or more of the attributes associated with the UVE that preceded the failure of the component.

In some embodiments, the UVE defines a respective aggregation method for each of the attributes, wherein the respective aggregation methods comprise one of addition, union over sets, concatenation, and list formation.

In some embodiments, the UVE corresponds to a virtual network including the respective devices that execute the set of two or more processes.

In some embodiments, the method may further comprise: analyzing sequence numbers of packets of the received data for the UVE; and in response to detecting a gap in the sequence numbers for one of the processes, sending instructions to the device that is executing the one of the processes to replay a current state for the UVE.

In some embodiments, the method may further comprise generating a report including the aggregated data, wherein the report is associated with the UVE.

In some embodiments, the report includes data indicative of one or more of a quantitative failure, a fault parameter, a memory failure, a telecommunications failure, a processor failure, a packet resend, and a dropped communication session.

In some embodiments, the method may further comprise forwarding the report and an identifier for the UVE to a centralized, queryable database.

In some embodiments, the virtual network comprises a software defined network (SDN).

The invention is also directed to a controller device comprising: one or more network interfaces communicatively coupled to one or more devices of a virtual network; and a processor configured to determine, for the virtual network, a set of two or more related processes executed by respective devices in the virtual network, receive via the network interfaces data for the set of two or more related processes, and aggregate the data for the set of two or more related processes to form aggregated data for the set of two or more related processes.

In some embodiments, the processor is further configured to present the aggregated data to a user.

In the invention, the aggregated data comprises data for a User-Visible Entity (UVE).

In the invention, the UVE defines one or more attributes for which values are to be extracted from the received data for the set of two or more related processes, and the processor is further configured to: extract values for the one or more attributes defined by the UVE; and aggregate the values for the one or more attributes.

In the invention, the UVE defines the one or more attributes for a tier in which the set of two or more related processes are executed.

In some embodiments, the tier comprises a respective service plane.

In some embodiments, the tier comprises one of a plurality of tiers, and wherein each of the plurality of tiers is associated with a respective UVE.

In some embodiments, the plurality of tiers include one or more of a control plane tier, an analytics tier, a configuration tier, and a software defined network (SDN) forwarding tier.

In some embodiments, the UVE comprises a UVE for the SDN forwarding tier, and wherein the UVE defines a bytes received attribute and a virtual machine names attribute.

In some embodiments, the plurality of tiers are arranged in a hierarchical fashion.

In some embodiments, each of the tiers includes a respective set of processes, and wherein each of the processes for a common one of the tiers is substantially similar.

In some embodiments, the processor is further configured to, for each of the tiers, determine resources of the virtual network used by the respective UVEs, and automatically determine whether the resources for one of the UVEs are insufficient based on a number of repeated failures associated with the one of the UVEs.

In some embodiments, the processor is further configured to, for each of the UVEs, in response to detecting a failure of a component associated with the UVE, logically associating the failed component with values for one or more of the attributes associated with the UVE that preceded the failure of the component.

In some embodiments, the UVE defines a respective aggregation device for each of the attributes, wherein the respective aggregation devices comprise one of addition, union over sets, concatenation, and list formation.

In some embodiments, the UVE corresponds to a virtual network including the respective devices that execute the set of two or more processes.

In some embodiments, the processor is further configured to analyze sequence numbers of packets of the received data for the UVE, and, in response to detecting a gap in the sequence numbers for one of the processes, send instructions to the device that is executing the one of the processes to replay a current state for the UVE.

In some embodiments, the processor is further configured to generate a report including the aggregated data, wherein the report is associated with the UVE.

In some embodiments, the report includes data indicative of one or more of a quantitative failure, a fault parameter, a memory failure, a telecommunications failure, a processor failure, a packet resend, and a dropped communication session.

In some embodiments, the processor is further configured to forward, via the network interfaces, the report and an identifier for the UVE to a centralized, queryable database.

In some embodiments, the virtual network comprises a software defined network (SDN).

One embodiment is directed to a computer-readable storage medium having stored thereon instructions that, when executed, cause a processor to: determine, by a controller device for a virtual network, a set of two or more related processes executed by respective devices in the virtual network; receive, by the controller device, data for the set of two or more related processes; and aggregate, by the controller device, the data for the set of two or more related processes to form aggregated data for the set of two or more related processes.

One non-claimed example is directed to a method of predicting component failure, the method comprising receiving, by a communication protocol and with a virtual network controller that includes an analytics plane to analyze operations of a plurality of components in one or more virtual networks, a first parameter set from each of the components, wherein a parameter set from a component includes one or more quantitative parameters that each describes a state of the component; receiving, by the communication protocol and with the virtual network controller, an indication of detected component failure for one or more of the components; training, with the virtual network controller and using the first parameter sets and the indication of detected component failure, a trainable automated classifier to develop a classifying structure that distinguishes between component parameter sets that logically associate with a detected component failure and component parameter sets that do not logically associate with a detected component failure; receiving, by the communication protocol and with the virtual network controller, a second parameter set from each of the components; and predicting, with the virtual network controller using the trainable automated classifier and the classifying structure, a failure of a first one of the components The subsequent examples, introduced with "in some embodiments" do not fall under the scope of the claims.

In some embodiments, predicting a failure of a first one of the components comprises classifying the second parameter set for the first one of the components to a likely bad class according to the classifying structure.

In some embodiments, the classifying structure comprises one or more classification separation surfaces, and predicting a failure of a first one of the components comprises classifying the second parameter set for the first one of the components to a likely bad class according to one of the classification separation surfaces.

In some embodiments, the one of the classification separation surfaces is associated with a tolerance amount, and classifying the second parameter set for the first one of the components to a likely bad class comprises determining the second parameter set exceeds the tolerance amount.

In some embodiments, the trainable automated classifier comprises one or more support vector machines, and training the trainable automated classifier comprises inputting the first parameter sets and the indication of detected component failure to the support vector machines to produce the classifying structure.

In some embodiments, the virtual network controller is a distributed virtual network controller comprising a plurality of virtual network controller nodes, and each of the virtual network controller nodes comprises an analytics virtual machine that exchanges at least some analytics information to implement the analytics plane.

In some embodiments, the plurality of components includes virtual network elements that include one or more of servers, top-of-rack (TOR) switches, or chassis switches.

In some embodiments, the virtual network controller uses a software-defined network protocol to receive the first parameter set from each of the components.

In some embodiments, the components execute one of a forwarding plane, control plane, or configuration plane for the virtual networks.

One embodiment is directed to a virtual network controller comprising: an analytics plane; a control plane; one or more processors configured to execute the analytics plane to analyze operations of a plurality of components in one or more virtual networks, wherein the control plane receives, by a communication protocol, a first parameter set from each of the components, wherein a parameter set from a component includes one or more quantitative parameters that each describe a state of the component, wherein the control plane receives, by the communication protocol, an indication of detected component failure for one or more of the components, and wherein the control plane provides the first parameter sets and the indication of detected component failure to the analytics plane; a trainable automated classifier, wherein the analytics plane trains, using the first parameter sets and the indication of detected component failure, the trainable automated classifier to develop a classifying structure that distinguishes between first component parameter sets that logically associate with a detected component failure and second component parameter sets that do not logically associate with a detected component failure, wherein the control plane receives, by the communication protocol, a second parameter set from each of the components and provides the second parameter sets to the analytics plane, and wherein the analytics plane predicts, using the trainable automated classifier and the classifying structure, a failure of a first one of the components.

In some embodiments, predicting a failure of a first one of the components comprises classifying the second parameter set for the first one of the components to a likely bad class according to the classifying structure.

In some embodiments, the classifying structure comprises one or more classification separation surfaces, and the analytics plane predicts the failure of a first one of the components by classifying the second parameter set for the first one of the components to a likely bad class according to one of the classification separation surfaces.

In some embodiments, the one of the classification separation surfaces is associated with a tolerance amount, and classifying the second parameter set for the first component to a likely bad class comprises determining the second parameter set exceeds the tolerance amount.

In some embodiments, the trainable automated classifier comprises one or more support vector machines, and the analytics plane trains the trainable automated classifier by inputting the first parameter sets and the indication of detected component failure to the support vector machines to produce to the classifying structure.

In some embodiments, the virtual network controller comprises a plurality of virtual network controller nodes that implement a distributed virtual network controller, wherein each of the virtual network controller nodes comprises an analytics virtual machine that exchange at least some analytics information to implement the analytics plane.

In some embodiments, the plurality of components include virtual network elements that include one or more of servers, top-of-rack (TOR) switches, or chassis switches.

In some embodiments, the virtual network controller uses a software-defined network protocol to receive the first parameter set from each of the components.

In some embodiments, the components execute one of a forwarding plane, control plane, or configuration plane for the virtual networks.

One embodiment is directed to a non-transitory computer-readable medium comprising instructions that, when executed, cause one or more programmable processors to: receive, by a communication protocol and with a virtual network controller that includes an analytics plane to analyze operations of a plurality of components in one or more virtual networks, a first parameter set from each of the components, wherein a parameter set from a component includes one or more quantitative parameters that each describes a state of the component; receive, by the communication protocol and with the virtual network controller, an indication of detected component failure for one or more of the components; train, with the virtual network controller and using the first parameter sets and the indication of detected component failure, a trainable automated classifier to develop a classifying structure that distinguishes between component parameter sets that logically associate with a detected component failure and component parameter sets that do not logically associate with a detected component failure; receive, by the communication protocol and with the virtual network controller, a second parameter set from each of the components; and predict, with the virtual network controller using the trainable automated classifier and the classifying structure, a failure of a first one of the components.

In one example, a controller device includes one or more network interfaces communicatively coupled to one or more devices of a virtual network, and a processor configured to determine, for the virtual network, a set of two or more related processes executed by respective devices in the virtual network, receive via the network interfaces data for the set of two or more related processes, and aggregate the data for the set of two or more related processes to form aggregated data for the set of two or more related processes.

## Claims

1. A method comprising:
determining, by a controller device (22) for a virtual network (34), a set of two or more related processes executed by respective devices (12, 16, 18) in the virtual network, the related processes including a first process executed by a first device of a plurality of devices that form a physical network (8) and a second, related process executed by a second, different device of the plurality of devices, wherein the virtual network is executed as an overlay network formed over the physical network and between virtual switches executed by the plurality of devices including a first virtual switch executed by the first device and a second virtual switch executed by the second device, and wherein determining the set of two or more related processes comprises forming the set to include processes that perform similar operations on different instances of respective data;
receiving, by the controller device, data for the set of two or more related processes from the respective devices;
aggregating, by the controller device, the data for the set of two or more related processes to form aggregated data for the set of two or more related processes, wherein the aggregated data comprises data for a User-Visible Entity, UVE
wherein the UVE defines one or more attributes for which values are to be extracted from the received data for the set of two or more related processes, wherein the UVE defines the one or more attributes for a tier in which the set of two or more related processes are executed, and wherein aggregating comprises:
extracting values for the one or more attributes defined by the UVE, and
aggregating the values for the one or more attributes; and
generating, by the controller device, a report from the aggregated data, the report including data indicative of a fault in the virtual network.

2. The method of claim 1, further comprising presenting the aggregated data to a user.

3. The method of claim 1 or claim 2 wherein the tier comprises a respective service plane.

4. The method of any preceding claim, wherein the tier comprises one of a plurality of tiers, and wherein each of the plurality of tiers is associated with a respective UVE.

5. The method of claim 4, wherein the plurality of tiers include one or more of a control plane tier, an analytics tier, a configuration tier, or a software defined network, SDN, forwarding tier.

6. The method of any of claims 4 and 5, wherein the plurality of tiers are arranged in a hierarchical fashion.

7. The method of any of claims 4-5, further comprising:
for each of the tiers, determining resources of the virtual network used by the respective UVEs; and
automatically determining whether the resources for one of the UVEs are insufficient based on a number of repeated failures associated with the one of the UVEs.

8. The method of any preceding claim, wherein the UVE defines a respective aggregation method for each of the attributes, wherein the respective aggregation methods comprise one of addition, union over sets, concatenation, and list formation.

9. The method of any preceding claim, wherein the UVE corresponds to a virtual network including the respective devices that execute the set of two or more processes.

10. A controller device comprising one or more means for performing the method of any of claims 1-9.

11. The controller device of claim 10, wherein the controller device comprises one or more network interfaces communicatively couple-able to one or more of the devices of the virtual network, and wherein the one or more means comprise one or more processors.

12. A computer-readable storage medium having stored thereon instructions that, when executed, cause a processor to perform the method of any of claims 1-9.

## Patentansprüche

1. Verfahren, das Folgendes umfasst:
Bestimmen durch eine Steuereinrichtung (22) für ein virtuelles Netz (34) einer Gruppe von zwei oder mehr verwandten Vorgängen, die durch entsprechende Einrichtungen (12, 16, 18) in dem virtuellen Netz ausgeführt werden, wobei die verwandten Vorgänge einen ersten Vorgang, der durch eine erste Einrichtung mehrerer Einrichtungen, die einen Teil eines physischen Netzes (8) bilden, ausgeführt wird, und einen zweiten verwandten Vorgang, und der durch eine zweite, andere Einrichtung der mehreren Einrichtungen ausgeführt wird, enthalten, wobei das virtuelle Netz als ein Overlay-Netz ausgeführt wird, das über dem physischen Netz und zwischen virtuellen Switches, die durch die mehreren Einrichtungen ausgeführt werden und einen ersten virtuellen Switch, der durch die erste Einrichtung ausgeführt wird, und einen zweiten virtuellen Switch, der durch die zweite Einrichtung ausgeführt wird, gebildet ist, und wobei das Bestimmen der Gruppe von zwei oder mehr verwandten Vorgängen das Bilden der Gruppe derart, dass sie Vorgänge enthält, die ähnliche Operationen an unterschiedlichen Instanzen jeweiliger Daten ausführen, umfasst;
Empfangen durch die Steuereinrichtung von Daten für die Gruppe von zwei oder mehr verwandten Vorgängen von den entsprechenden Einrichtungen;
Ansammeln durch die Steuereinrichtung der Daten für die Gruppe von zwei oder mehr verwandten Vorgängen, um angesammelte Daten für die Gruppe von zwei oder mehr verwandten Vorgängen zu bilden, wobei die angesammelten Daten eine für einen Anwender sichtbare Einheit, UVE, enthalten,
wobei die UVE ein oder mehrere Attribute definiert, für die Werte aus den empfangenen Daten für die Gruppe von zwei oder mehr verwandten Vorgängen extrahiert werden sollen, wobei die UVE das eine oder die mehreren Attribute für eine Stufe definiert, auf der die Gruppe von zwei oder mehr verwandten Vorgängen ausgeführt wird, und wobei das Ansammeln Folgendes umfasst:
Extrahieren von Werten für das eine oder die mehreren Attribute, die durch die UVE definiert werden, und
Ansammeln der Werte für das eine oder die mehreren Attribute; und
Erzeugen durch die Steuereinrichtung eines Berichts aus den angesammelten Daten, wobei der Bericht Daten enthält, die einen Fehler in dem virtuellen Netz angeben.

2. Verfahren nach Anspruch 1, das ferner das Präsentieren der angesammelten Daten für einen Anwender umfasst.

3. Verfahren nach Anspruch 1 oder Anspruch 2, wobei die Stufe ein entsprechendes Dienstniveau enthält.

4. Verfahren einem vorhergehenden Anspruch, wobei die Stufe mehrere Stufen umfasst und wobei jede der mehreren Stufen einer entsprechenden UVE zugeordnet ist.

5. Verfahren nach Anspruch 4, wobei die mehreren Stufen eine oder mehrere Steuerniveaustufen, eine Analysestufe, eine Konfigurationsstufe oder eine Weiterleitungsstufe eines durch Software definierten Netzes, SDN-Weiterleitungsstufe, umfassen.

6. Verfahren nach einem der Ansprüche 4 und 5, wobei die mehreren Stufen auf hierarchische Weise angeordnet sind.

7. Verfahren nach einem der Ansprüche 4-5, das ferner Folgendes umfasst:
für jede der Stufen Bestimmen von Betriebsmitteln des virtuellen Netzes, die von den entsprechenden UVE verwendet werden; und
automatisches Bestimmen, ob die Betriebsmittel für eine der UVE unzureichend ist, anhand einer Anzahl wiederholter Fehler, die der einen der UVE zugeordnet sind.

8. Verfahren nach einem vorhergehenden Anspruch, wobei die UVE ein entsprechendes Ansammlungsverfahren für jedes der Attribute definiert, wobei die entsprechenden Ansammlungsverfahren eine Addition oder eine Vereinigung über Gruppen oder eine Verknüpfung oder eine Listenbildung umfassen.

9. Verfahren nach einem vorhergehenden Anspruch, wobei die UVE einem virtuellen Netz entspricht, das die entsprechenden Einrichtungen enthält, die die Gruppe von zwei oder mehr verwandten Vorgängen ausführen.

10. Steuereinrichtung, die ein oder mehrere Mittel zum Ausführen des Verfahrens nach einem der Ansprüche 1-9 umfasst.

11. Steuereinrichtung nach Anspruch 10, wobei die Steuereinrichtung eine oder mehrere Netzschnittstellen umfasst, die mit einer oder mehreren der Einrichtungen des virtuellen Netzes kommunikationstechnisch gekoppelt werden können, und wobei das eine oder die mehreren Mittel einen oder mehrere Prozessoren umfassen.

12. Computerlesbares Speichermedium, in dem Befehle gespeichert sind, die dann, wenn sie ausgeführt werden, einen Prozessor veranlassen, das Verfahren nach einem der Ansprüche 1-9 auszuführen.

## Revendications

1. Procédé comprenant :
la détermination, par un dispositif de commande (22) d'un réseau virtuel (34) d'un ensemble de deux ou plusieurs processus connexes exécutés par des dispositifs respectifs (12, 16, 18) dans le réseau virtuel, les processus connexes comportant un premier processus exécuté par un premier dispositif d'une pluralité de dispositifs qui font partie d'un réseau physique (8) et un second processus connexe exécuté par un second dispositif différent de la pluralité de dispositifs, où le réseau virtuel est exécuté sous la forme d'un réseau superposé formé par-dessus le réseau physique et entre des commutateurs virtuels exécutés par la pluralité de dispositifs comprenant un premier commutateur virtuel exécuté par le premier dispositif et un second commutateur virtuel exécuté par le second dispositif, et où la détermination de l'ensemble de deux processus connexes, ou davantage, comprend la formation de l'ensemble pour inclure des processus qui réalisent des opérations semblables sur différentes instances de données respectives ;
la réception, par le dispositif de commande, de données pour l'ensemble de deux processus connexes, ou davantage, depuis les dispositifs respectifs ;
l'agrégation, par le dispositif de commande, des données pour l'ensemble de deux processus connexes, ou davantage, pour former des données agrégées pour l'ensemble de deux processus connexes, ou davantage, où les données agrégées comprennent des données pour une entité visible par l'utilisateur, UVE,
où l'UVE définit un ou plusieurs attributs pour lesquels des valeurs doivent être extraites des données reçues pour l'ensemble de deux processus connexes, ou davantage, où l'UVE définit les un ou plusieurs attributs pour un niveau dans lequel l'ensemble de deux processus connexes, ou davantage, est exécuté, et où l'agrégation comprend :
l'extraction de valeurs pour les un ou plusieurs attributs définis par l'UVE ; et
l'agrégation des valeurs pour les un ou plusieurs attributs ;et
la génération, par le dispositif de commande, d'un rapport à partir des données agrégées, le rapport comportant des données indicatives d'une défaillance dans le réseau virtuel.

2. Procédé selon la revendication 1, comprenant la présentation des données agrégées à un utilisateur.

3. Procédé selon la revendication 1 ou la revendication 2, dans lequel le niveau comprend un plan de service respectif.

4. Procédé selon n'importe quelle revendication précédente, dans lequel le niveau comprend l'un d'une pluralité de niveaux, et où chacun de la pluralité de niveaux est associé à une UVE respective.

5. Procédé selon la revendication 4, dans lequel la pluralité de niveaux comprend un ou plusieurs niveaux d'un niveau de plan de commande, d'un niveau d'analyse, d'un niveau de configuration ou d'un niveau de transmission réseau défini par logiciel, SDN.

6. Procédé selon la revendication 4 ou la revendication 5, dans lequel la pluralité de niveaux est agencée de manière hiérarchique.

7. Procédé selon l'une quelconque des revendications 4 à 5, comprenant en outre :
pour chacun des niveaux, la détermination de ressources du réseau virtuel utilisé par les UVE respectives ; et
la détermination automatique que les ressources pour l'une des UVE sont ou non insuffisantes sur la base d'un nombre de défaillances répétées associées à l'une des UVE.

8. Procédé selon n'importe quelle revendication précédente, dans lequel l'UVE définit un procédé d'agrégation respectif pour chacun des attributs, où les procédés d'agrégation respectifs comprennent un procédé parmi l'addition, l'union sur des ensembles, la concaténation et la formation de listes.

9. Procédé selon n'importe quelle revendication précédente, dans lequel l'UVE correspond à un réseau virtuel comportant les dispositifs respectifs qui exécutent l'ensemble de deux processus, ou davantage.

10. Dispositif de commande comprenant un ou plusieurs moyens pour réaliser le procédé selon l'une quelconque des revendications 1 à 9.

11. Dispositif de commande selon la revendication 10, le dispositif de commande comprenant une ou plusieurs interfaces réseau pouvant être couplées en communication à un ou plusieurs des dispositifs du réseau virtuel, et où les un ou plusieurs moyens comprennent un ou plusieurs processeurs.

12. Support de stockage lisible par ordinateur sur lequel sont stockées des instructions qui, lorsqu'elles sont exécutées, amènent un processeur à exécuter le procédé énoncé par l'une quelconque des revendications 1 à 9.
